# EUROPEAN PATENT APPLICATION

(11) **EP 4 790 941 A1**
(43) Date of publication of application: **12.08.2026**
(21) Application number: 25156321.9
(22) Date of filing: 06.02.2025
(51) Int. Cl.: H04L 5/00, H04W 8/24, H04W 24/10

(54) **COMMUNICATION DEVICE AND NETWORK DEVICE INVOLVED IN AN SSB-RELATED PROCEDURE**

(71) Applicant: Panasonic Intellectual Property Corporation of America, Torrance, CA 90504 (US)
(72) Inventor: LI, Hongchao, 63225 Langen (DE); KURUVATTI, Nandish, 63225 Langen (DE); HORIUCHI, Ayako, Osaka, 571-8501 (JP); SUZUKI, Hidetoshi, Osaka, 571-8501 (JP)
(74) Representative: Grünecker Patent- und Rechtsanwälte PartG mbB

(57) **Abstract**

The present disclosure relates to a communication device comprising the following. A transceiver of the communication device transmits device capability information to another device. The device capability information indicates a capability of the communication device to support at least any two of:
- one type or plural types of synchronization signal blocks, SSB,
- SSBs in a same frequency location or different frequency locations,
- SSBs on one or more frequency synchronization raster, and
- one or more SSB measurement timing configurations, SMTC, respectively defining a measurement time window for the UE to measure one or more SSBs.

## Description

### FIELD OF THE PRESENT DISCLOSURE

The present disclosure is directed to methods, devices and articles in communication systems, such as 3GPP communication systems.

### TECHNICAL BACKGROUND

Currently, the 3rd Generation Partnership Project (3GPP) works at the technical specifications for the new radio access technology - 5G NR (New Radio), which is also called fifth generation (5G) or NR and used interchangeably herein.

One objective is to provide a single technical framework addressing all usage scenarios, requirements and deployment scenarios (see e.g., section 6 of 3GPP TR 38.913 e.g., version 16.0.0 or version 17.0.0 or version 18.0.0), at least including enhanced mobile broadband (eMBB), ultra-reliable low-latency communications (URLLC), and massive machine type communication (mMTC). For example, eMBB deployment scenarios may include indoor hotspot, dense urban, rural, urban macro and high speed; URLLC deployment scenarios may include industrial control systems, mobile health care (remote monitoring, diagnosis and treatment), real time control of vehicles, wide area monitoring and control systems for smart grids; mMTC deployment scenarios may include scenarios with large number of devices with non-time critical data transfers such as smart wearables and sensor networks. The services eMBB and URLLC are similar in that they both demand a very broad bandwidth, while they are different in that the URLLC service may preferably require ultra-low latencies.

A second objective is to achieve forward compatibility, which facilitates a completely new system design and/or the introduction of novel features.

### SUMMARY

One non-limiting and exemplary embodiment facilitates providing a user equipment to perform an improved SSB-related procedure.

In an embodiment, the techniques disclosed here feature a communication device comprising the following. A transceiver of the communication device transmits device capability information to another device. The device capability information indicates a capability of the communication device to support at least any two of:
- one type or plural types of synchronization signal blocks, SSB,
- SSBs in a same frequency location or different frequency locations,
- SSBs on one or more frequency synchronization raster, and
- one or more SSB measurement timing configurations, SMTC, respectively defining a measurement time window for the UE to measure one or more SSBs.

Additional benefits and advantages of the disclosed embodiments and different implementations will be apparent from the specification and figures. The benefits and/or advantages may be individually obtained by the various embodiments and feature1s of the specification and drawings, which need not all be provided in order to obtain one or more of such benefits and/or advantages.

### BRIEF DESCRIPTION OF THE FIGURES

In the following exemplary embodiments are described in more detail with reference to the attached figures and drawings.
- **Fig. 1**: shows an exemplary architecture for a 3GPP NR system to which the improved procedures of the present disclosure may be applied;
- **Fig. 2**: illustrates a simplified and exemplary implementation of a set of synchronization signal blocks distributed in a half-frame,
- **Fig. 3**: illustrates several beams and the corresponding SSB index, SSB1-SSB8, and how the beams are transmitted by the gNB in a beam-sweeping manner,
- **Fig. 4**: illustrates different SSBs with different periodicities in two cells A and B,
- **Fig. 5**: illustrates the relationship between the measurement gap and SSBs to be detected and measured within the SMTC window,
- **Fig. 6**: illustrates the different scenarios for triggering the on-demand SSB,
- **Fig. 7**: illustrates an exemplary and simplified structure of a communication device, such as UE, and a base station,
- **Fig. 8**: illustrates a structure of the communication device, such as the UE, according to an exemplary implementation of the improved SSB procedure,
- **Fig. 9**: illustrates a flow diagram for the UE behavior according to an exemplary implementation of the improved SSB procedure,
- **Fig. 10**: illustrates a structure of a network device, such as the base station, according to an exemplary implementation of the improved SSB procedure,
- **Fig. 11**: illustrates a flow diagram for the network device behavior, according to an exemplary implementation of the improved SSB procedure,
- **Fig. 12**: is a signaling diagram illustrating an exemplary exchange between the UE and the base station for an exemplary implementation of the improved SSB procedure,
- **Fig. 13**: illustrates an example of the First Implementation of the improved SSB procedure, the UE being configured with one SMTC and plural SSBs,
- **Fig. 14**: illustrates another example of the First Implementation of the improved SSB procedure, the UE being configured with one SMTC and plural SSBs,
- **Fig. 15**: illustrates an example of the Second Implementation of the improved SSB procedure, the UE being configured with two SMTCs and plural SSBs,
- **Fig. 16**: illustrates another example of the Second Implementation of the improved SSB procedure, the UE being configured with two SMTCs and plural SSBs,
- **Fig. 17**: illustrates an example of a First Variant of the Second Implementation of the improved SSB procedure, the UE being configured with two SMTCs and plural SSBs with different frequency locations,
- **Fig. 18**: illustrates an example of the Third Implementation of the improved SSB procedure, the UE being configured with an adaptive SMTC and plural SSBs,
- **Fig. 19 and 20**: illustrates another example of the Third Implementation of the improved SSB procedure, the UE being configured with an adaptive SMTC and plural SSBs, where the second SSB is an adaptive SSB
- **Fig. 21 and 22**: illustrates an example of the Third Implementation of the improved SSB procedure, the UE being configured with an adaptive SMTC and plural SSBs, where the second SSB is triggered OFF and ON,
- **Fig. 23**: illustrates another example of the Third Implementation of the improved SSB procedure, the UE being configured with an adaptive SMTC and plural SSBs, where the second SSB is triggered OFF and ON, and
- **Fig. 24**: shows exemplary functional split options in 5G open-radio access network (O-RAN).

### DETAILED DESCRIPTION

### 5G NR system architecture and protocol stacks

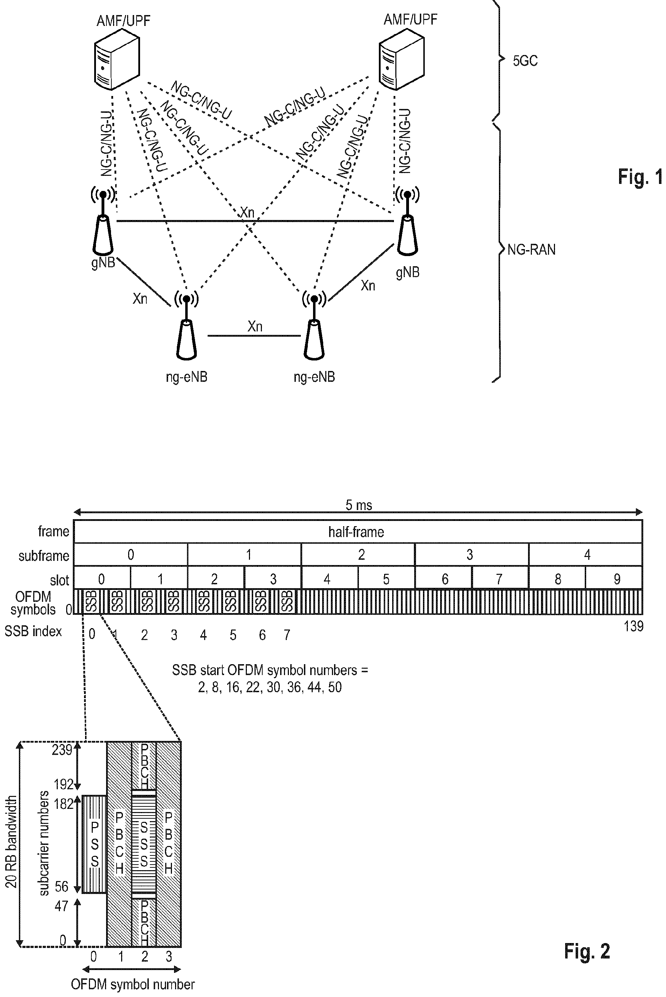

5G NR system architecture assumes an NG-RAN (Next Generation - Radio Access Network) that comprises gNBs, providing the NG-radio access user plane (SDAP/PDCP/RLC/MAC/PHY) and control plane (RRC) protocol terminations towards the UE. The gNBs are interconnected with each other by means of the Xn interface. The gNBs are also connected by means of the Next Generation (NG) interface to the NGC (Next Generation Core), more specifically to the AMF (Access and Mobility Management Function) (e.g. a particular core entity performing the AMF) by means of the NG-C interface and to the UPF (User Plane Function) (e.g. a particular core entity performing the UPF) by means of the NG-U interface. The NG-RAN architecture is illustrated in Fig. 1 (see e.g. 3GPP TS 38.300 v18.3.0, section 4).

### Synchronization Signal Block measurement timing configuration - SMTC - PSS/SSS, PBCH

NR has introduced the so-called synchronization signal block, SS block (SSB), which comprises a Primary Synchronization Signal (PSS), a Secondary Synchronization Signal (SSS), and a Physical Broadcast Channel (PBCH) (e.g. PBCH DMRS and PBCH data). The PSS and SSS can be used by UEs to find, synchronize to and identify a network. The PBCH carries a minimum amount of system information including an indication where the remaining broadcast system information is transmitted.

In LTE, these three signals were also used, the PSS, SSS, and PBCH, although not as being part of one SSB. The three SSB components are always transmitted together in NR, e.g. they have the same periodicity. A given SSB may be repeated within an SS burst set, which can be potentially used for a gNB beam-sweeping transmission. The SS burst set may be confined to a particular time period, such as a 5ms window (half-frame). For initial cell selection, the UE may assume a default SS burst set periodicity of 20 ms.

In more detail, an SSB burst can understood as a group of SSBs transmitted with a certain window and, where each SSB can be potentially transmitted on a different beam. The SSBs in the SS burst set can be transmitted in a time-division multiplexing fashion for the beam sweeping.

The maximum number of SSBs L_{Max} within an SS burst set typically depends on the carrier frequency/band, e.g. 4 maximum SSBs for carrier frequencies < 3GHz, 8 maximum SSBs for carrier frequencies between 3GHz and 6GHz, and 64 maximum SSBs for carrier frequencies above 6 GHz. Each SSB has an index with an increasing number from 0 to the maximum number L_{Max}-1. In brief, the number of SSBs in a burst may depend on factors such as the frequency band and the deployment scenario, wherein each SSB in a burst can be identified by an SSB index.

The 5G NR PSS is a Physical Layer specific signal to identify the radio frame boundary and is type of an m-sequence. The 5G NR SSS is also a Physical-Layer specific signal to identify the subframe boundary and is also an m-sequence. The PSS/SSS sequence is composed of complex values used by each element/sample of the sequence. Information on the current exemplary 5G implementation of the PSS and SSS is available from 3GPP TS 38.211 v17.6.0 sections 7.4.2.2 and 7.4.2.3 (see also 3GPP TS 38.211 v18.5.0 sections 7.4.2.2 and 7.4.2.3), including the respective sequence generation and mapping to physical resources.

The time-frequency structure of an SS/PBCH block, carrying the SSS is described in the 3GPP TS 38.211 section 7.4.3.1. In such an exemplary 5G implementation, in the time domain, an SS/PBCH block consists of 4 OFDM symbols, numbered in an increasing order from 0 to 3. The distribution of the PSS, SSS and PBCH signals within the SS/PBCH block is defined by Table 7.4.3.1-1 of TS 38.211.

In the frequency domain, an SS/PBCH block consists of 240 contiguous subcarriers, indexed with 0 to 239. The exact subcarriers to be used for each PSS, SSS and PBCH signal within the SS/PBCH block is also defined by Table 7.4.3.1-1 of TS 38.211.

A simplified and exemplary illustration of the SSB according to the above definitions is illustrated in **Fig. 2****,** which shows at the bottom part the PSS, SSS, and PBCH in the time and frequency domain.

The SSB set illustrated in Fig. 2 shows a case where all the possible candidate SSBs are indeed transmitted by the base station. However, it is not required to transmit all SSBs. Rather, the gNB, based on some requirements, may select only some of those SSBs within a set of SSBs and transmit those. The SSBs that are actually transmitted by the SSB can be called the SSB pattern. The SSB pattern has basically the same characteristics as the corresponding set of SSBs, including the periodicity.

The gNB informs the UE about the SSB pattern, e.g. which SSBs are in fact transmitted and which are not. This can be done e.g. by the gNB transmitting an SSB bitmap, which defines the SSB pattern, wherein each bit of the SSB bitmap relates to one SSB and identifies whether said SSB is transmitted or not. The length of the SSB bitmap depends on the applicable SSB set, e.g. 4, 8, or 64 bits.

In brief, a set of candidate SSBs is configured for use by the gNB in the cell. Furthermore, among the set of candidate SSBs, the gNB can then select either all or fewer candidate SSBs to actually transmit, called an SSB pattern.

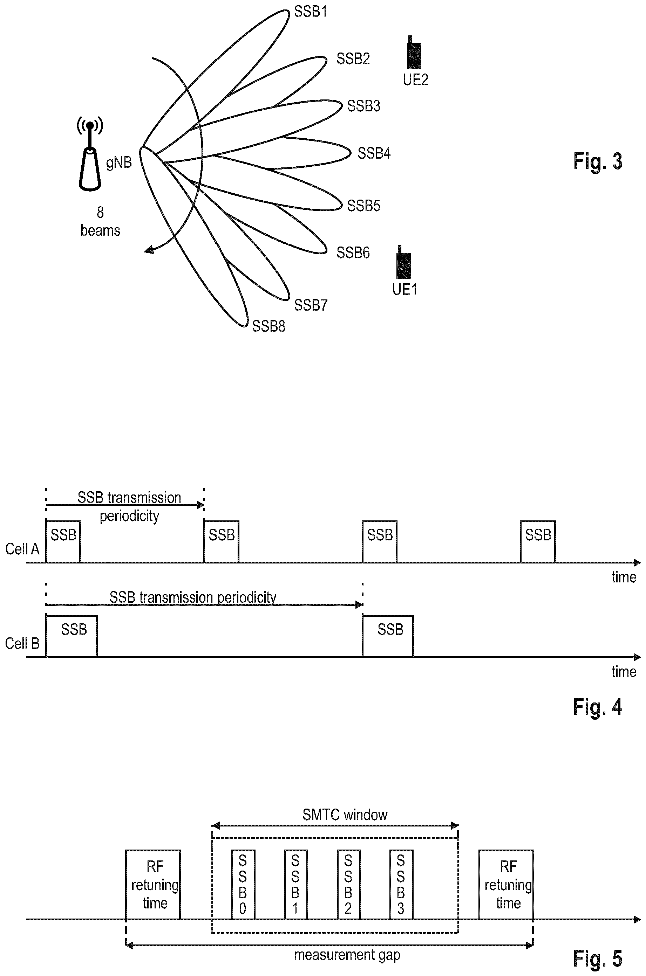

All the SSBs can be transmitted with all beams in the system. Alternatively, the SSBs can be transmitted in different beams, e.g. when SSB beamforming is enabled. In that case, each SSB is transmitted on a different spatial beam, as illustrated in **Fig. 3****.** Similar to the exemplary assumption of Fig. 2, there are 8 SSBs (0-7) which can respectively be transmitted in a different beam, each beam being transmitted in a different beam direction. Therefore, a beam-sweeping form of transmission of the SSBs is achieved; put differently, the sweeping transmission of the beams (and SSBs) is time-division multiplexed and occurs at different times. The two UEs, UE1 and UE2, will receive a different SSB at different times. Each beam has a beam index, e.g. where the beam index corresponds to the SSB index that is transmitted via said beam.

**Fig. 4** illustrates how in two different cells A and B SSBs with different periodicities are transmitted, e.g. the SSBs of Cell B being transmitted with twice the periodicity of the SSBs of Cell A.

The UE uses the SSBs, and particularly the SSB signals (e.g. the PSS, SSS, and PBCH) in different mechanisms, such as for serving cell measurements, time / frequency synchronization etc.

### Reference Signals

Several different types of reference signals (RS) are used for 5G NR (see 3GPP TS 38.211 v18.5.0 section 7.4.1). These reference signals may be used by the UE to perform measurements during the MG. At least the following reference signals are available in 5G NR:
- CSI-RS, Channel State Information Reference Signal, usable for channel state information acquisition and beam management
- PDSCH DMRS, DeModulation Reference Signal, usable for the PDSCH demodulation
- PDCCH DMRS, DeModulation Reference Signal, usable for the PDCCH demodulation
- PBCH DMRS, DeModulation Reference Signal, usable for the PBCH demodulation
- PTRS, Phase Tracking Reference Signal, usable for phase tracking the PDSCH
- Tracking Reference Signal, usable for time tracking, also called "CSI-RS for tracking" (see TS 38.214 v18.4.0, section 8.4)
- RIM reference signals
- Positioning reference signals

### Measurement gap (MG) and SMTC (SS/PBCH-block Measurement Timing Configuration)

3GPP supports measurement gaps (which sometimes are also referred to as "measurement restrictions"). The MG is configured for the UE to perform measurements when the UE cannot simultaneously measure the target carrier frequency while transmitting/receiving on the serving cell. In other words, the MG is a period of time during which the device's transceiver is temporarily inactive for receiving or transmitting in the serving cell, but is instead used to perform radio measurements, for instance radio resource management (RRM) measurements, in a target carrier. The MG gap allows the device to perform various measurements without interfering with ongoing transmissions. One example implementation of a corresponding measurement procedure is defined in 3GPP, e.g. in Technical Standard 3GPP TS 38.133, version 18.7.0, Chapter 9.

According to configuration, the MG lengths could be 1.5, 3, 3.5, 4, 5.5, and 6 ms, which MG repetition periodicities could be 20, 40, 80, and 160 ms. An RF re-tuning time is applied before and after the measurement gap, which is 0.5 ms for carrier frequency measurements in the Frequency Range 1, FR1 (e.g. for bands within 410 MHz and 7 215 MHz) and is 0.25 ms in FR2 (e.g. for bands within 24.25 GHz and 71 GHz).

The need for a MG in NR may further depend on the capability of the UE, the active BWP of the UE and the current operating frequency. In NR, MGs may be configured for performing one or more of intra-frequency, inter-frequency and inter-RAT measurements. For example, a UE may require measurement gaps if measurements are to be performed outside the UE's currently-active Bandwidth Part (BWP).

The network provides the timing of SSBs (e.g. of the neighbour cells) using one or more SMTCs (SS/PBCH Block Measurement Timing Configurations, or SSB Measurement Timing Configurations). The SMTC defines an SMTC time window during which the UE is expected to monitor and measure SSBs. Outside the SMTC time window the UE does not expect SSBs and does not need to performed measurements, which allows to save energy by the UE.

The SMTC window duration is configured such that the UE can identify and measure the SSBs within the SMTC window, i.e. the SMTC duration should be sufficient to accommodate all SSBs that are transmitted. The SMTC window is for instance within a measurement gap, wherein the network configures the measurement gap and SMTC window based on the SSB burst periodicity

**Fig. 5** conceptually illustrates the relationship between the measurement gap and SSBs to be detected and measured within the SMTC window. As exemplarily illustrated, the RF retuning time is considered to be within the measurement gap, respectively at its beginning and end. In one example, the SSBs 0-3 can be respectively from different neighbouring cells.

The SMTC window can be configured by the UE's serving cell, e.g. based on a periodicity (how often the SMTC window repeats, e.g., 20 ms, 40 ms, etc.), an offset (time offset relative to a reference time), and a duration (how long the UE is expected to perform the measurements during the SMTC window).

SSB burst periodicity can have values of e.g. 5/10/20/40/80/160 milliseconds. However, a UE in connected mode need not measure so often, particularly under good channel conditions. In such cases, SMTC window periodicity can be configured to longer, thereby allowing the UE to save energy

An example 5G based detailed implementation of how to SMTC windows are used for measurement can be found in 3GPP TS 38.331, v18.4.0, section 5.5.2.10 "Reference signal measurement timing configuration".

The following example definition of the SSB-MTC Information Element can be found in 3GPP TS 38.331, v18.4.0, section 6.3.2 thereof:
- SSB-MTC

The IE *SSB-MTC* is used to configure measurement timing configurations, i.e., timing occasions at which the UE measures SSBs.

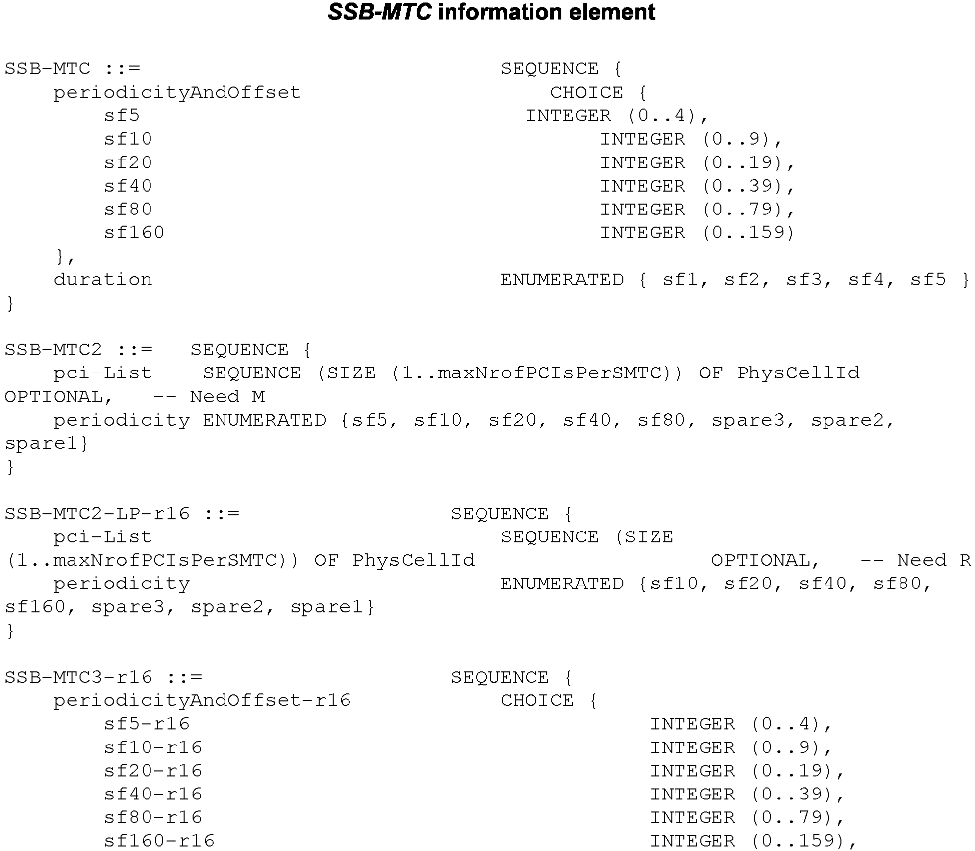

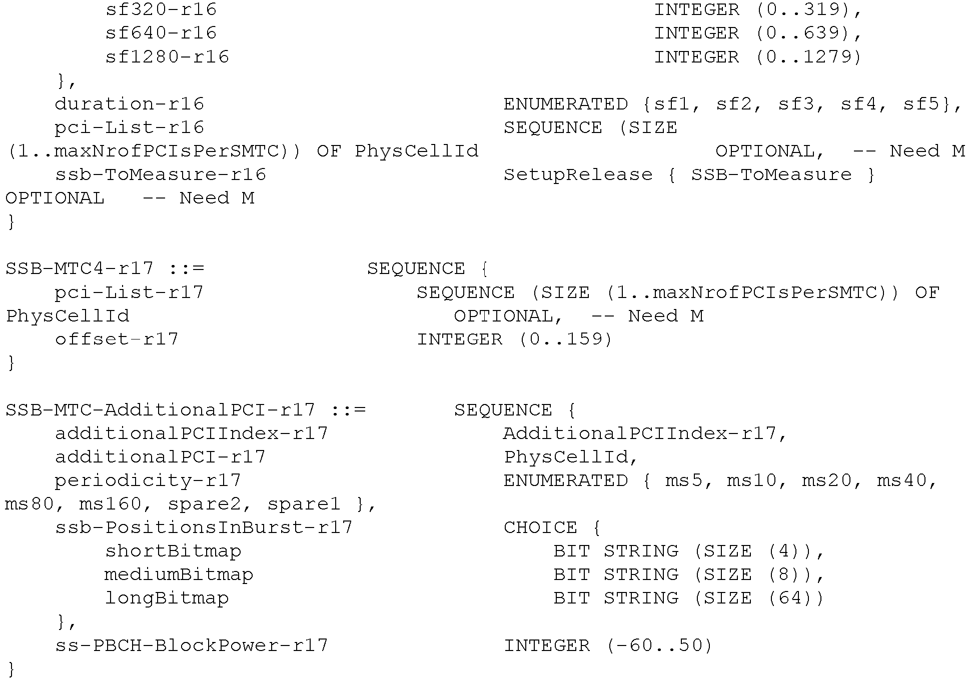

| ***SSB-MTC* field descriptions** |
|---|
| ***duration*** |
| Duration of the measurement window in which to receive SS/PBCH blocks. It is given in number of subframes (see TS 38.213 [13], clause 4.1). |
| ***periodicityAndOffset*** |
| Periodicity and offset of the measurement window in which to receive SS/PBCH blocks, see 5.5.2.10. Periodicity and offset are given in number of subframes. |

| ***SSB-MTC2* field descriptions** |
|---|
| ***pci-List*** |
| PCIs that follow this SMTC. |

| ***SSB-MTC3* field descriptions** |
|---|
| ***duration*** |
| Duration of the measurement window in which to receive SS/PBCH blocks. It is given in number of subframes (see TS 38.213 [13], clause 4.1). |
| ***pci-List*** |
| PCIs that follow this SMTC, used for IAB-node discovery. |
| ***periodicityAndOffset*** |
| Periodicity and offset of the measurement window in which to receive SS/PBCH blocks, see 5.5.2.10. Periodicity and offset are given in number of subframes. |
| ***ssb-ToMeasure*** |
| The set of SS blocks to be measured within the SMTC measurement duration. The first/leftmost bit corresponds to SS block index 0, the second bit corresponds to SS block index 1, and so on. Value 0 in the bitmap indicates that the corresponding SS block is not to be measured while value 1 indicates that the corresponding SS block is to be measured (see TS 38.215 [9]). When the field is not configured the IAB-MT measures on all SS blocks. |
| Regardless of the value of this field, SS blocks outside of the applicable *smtc* are not to be measured. See TS 38.215 [9] clause 5.1.1. |

| ***SSB-MTC4* field descriptions** |
|---|
| ***pci-List*** |
| PCIs that follow this SMTC. |
| ***offset*** |
| Offset of the measurement window in which to receive SS/PBCH blocks, see 5.5.2.10. Offset is given in number of subframes. |

| ***SSB-MTC-AdditionalPCI* field descriptions** |
|---|
| ***additionalPCI*** |
| PCI of the additional SSB different from serving cell PCI. |
| ***periodicity*** |
| Periodicity of the SS/PBCH blocks, see 5.5.2.10. Periodicity is given in number of subframes. |
| ***ssb-PositionsInBurst*** |
| Indicates the time domain positions of the transmitted SS-blocks in a half frame with SS/PBCH blocks as defined in TS 38.213 [13], clause 4.1. The first/leftmost bit corresponds to SS/PBCH block index 0, the second bit corresponds to SS/PBCH block index 1, and so on. Value 0 in the bitmap indicates that the corresponding SS/PBCH block is not transmitted while value 1 indicates that the corresponding SS/PBCH block is transmitted. |
| ***ss-PBCH-BlockPower*** |
| Average EPRE of the resources elements that carry secondary synchronization signals in dBm that the NW used for SSB transmission, see TS 38.213 [13], clause 7. |

### SSB-based measurements

In 5G mobile communication, SSB (Synchronization Signal Block) is an important signal used by the UE to perform various different types of measurements. For instance, SSB signals can be measured for Layer-3 measurements that can be used in the context of mobility, handover, initial access, and network performance optimization (e.g. for 5G NR cell search and synchronization).

A UE in RRC Idle or Inactive state can measure the SSBs of neighbouring cells for cell selection and cell reselection. A UE in RRC Connected state can measure the SSBs of neighbouring cells and transmit the measurement results in a measurement report to the gNB. The measurement results in the report can assist the gNB in taking decision regarding whether or not handover the UE to another cell.

SSB can measured also in the context of beam management. Beam management is a set of Layer 1 (PHY) and Layer 2 (MAC) procedures to establish and retain an optimal beam pair for good connectivity. A beam pair e.g. consists of a transmit beam and a corresponding receive beam in one link direction. Before a UE can communicate with the network, it must perform cell search and selection procedures and obtain initial cell synchronization and system information. The first steps in that process are acquiring frame synchronization, finding out the cell identity and decoding the MIB and SIB1. In the case of a multi-antenna system that transmits multiple beams, detecting the beams from the gNB is also a part of the initial procedure (e.g. where the UE normally detects all the beams in the search space). Beam management can be categorized into the following three main procedures:
- initial beam establishment,
- beam adjustment (also called beam tracking and refining), and
- beam failure recovery.

In brief, the network may configure periodic or semi-persistent beam reporting or trigger aperiodic beam reporting for the purpose of timely acquiring a best/preferred beam for data /control transmissions. UE performs measurements on reference signals (SSBs and/or CSI-RSs), configured by the gNB, to determine the best reception (Rx) beam (and possibly transmission, Tx, beam as well, in case of beam correspondence). Beam measurement and reporting involves that the UE measures a set of reference signals corresponding to different downlink Tx beams. The UE then reports these measurements to the network (e.g. the serving gNB). Based on the received measurements, the network can then e.g. decide a suitable downlink Tx beam for the UE. The measurement and reporting can be e.g. based on the CSI framework.

### On-demand SSB and adaptive SSB

The concept of SSBs for 5G NR has been explained above. According the above, the SSBs are transmitted periodically and continuously by a cell. Sometimes, these SSBs are also called "always-on SSB", because the SSB is typically always transmitted by the network.

3GPP 5G NR has been discussing additionally defining an on-demand SSB, which is a mechanism where the transmission of Synchronization Signal/Physical Broadcast Channel (SS/PBCH) Blocks by a base station is triggered on-demand (e.g. by the UE), rather than being transmitted periodically in a continuous manner. This concept is introduced in 5G NR (New Radio) as part of enhancements to reduce power consumption and improve resource efficiency, especially in scenarios where continuous SSB transmission is not necessary.

The on-demand SSB can be used by the UE e.g. for SCell time/frequency synchronization, L1/L3 measurements and SCell activation, and other aspects.

The on-demand SSB can be configured in in addition to the legacy (always-on) SSB, or as an alternative.

In a cell that supports an on-demand operation, two cases are discussed:
- Case #1: no legacy (always-on) SSB is transmitted,
- Case #2: the legacy (always-on) SSB is periodically transmitted on the cell.

At least the following scenarios for an on-demand SSB SCell operation are possible:
Scenario #2: SCell is configured to a UE but before the UE receives an SCell activation command (e.g., as defined in TS 38.321)
Scenario #3: After the UE receives an SCell activation command (e.g., as defined in TS 38.321)

This does not preclude the case where SCell activation is completed. Thus, at least for the following combinations of scenarios and cases, an on-demand SSB can be triggered (e.g. by gNB):
- Scenario #2 and Case #1
- Scenario #2 and Case #2
- Scenario #2A and Case #1
- Scenario #2A and Case #2
- Scenario #3A and Case #1
- Scenario #3A and Case #2
- Scenario #3B and Case #1
- Scenario #3B and Case #2

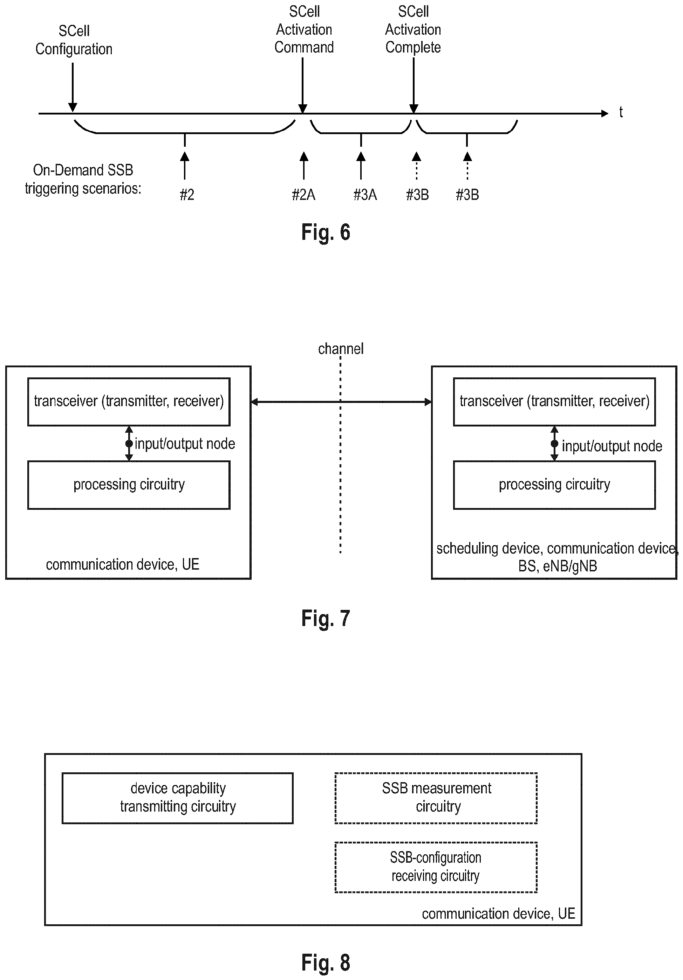

The above scenarios for triggering the on-demand SSB are depicted in **Fig. 6****.**

For Case #1, once an on-demand SSB is triggered, its transmission can be in a periodic manner. However, this does not imply that a periodic on-demand SSB is transmitted indefinitely after having been triggered.

As shown in Fig. 6, Scenario #2A refers to when the UE receives SCell activation command (e.g., as defined in TS 38.321). Scenario #3A refers to a time after the UE receives SCell activation command (e.g., as defined in TS 38.321) and until SCell activation is completed. Further, Scenario #3B refers to when SCell activation is completed and SCell is activated, or after the SCell activation is completed and SCell is activated.

It has so far been agreed in 3GPP that, when an always-on SSB is already periodically transmitted in a cell, an on-demand SSB can be triggered at least in scenario #2, i.e. when an SCell is configured to a UE but before the UE receives an SCell activation command, or in scenario #2A, i.e. when the UE receives the SCell activation command.

However, it is still not clear how the UE and base station are to best make use of the on-demand SSB, e.g. in relation to UE functions such as time/frequency synchronization, L1 measurement, and L3 measurement.

In one example implementation, the on-demand SSB can be configured (e.g. using RRC), including its parameters such as the frequency location of the on-demand SSB, the SSB positions within an on-demand SSB burst, a periodicity of the on-demand SSB. The triggering of the on-demand SSB can be done based on RRC-based signaling and/or MAC-CE-based signaling and/or DCI-based signaling.

There have been further discussions in 3GPP regarding whether or not the frequency location of the on-demand SSB is different or the same as the frequency location of the legacy (always-on) SSB. In case the always-on SSB and the on-demand SSB are in the same frequency location, this can be detrimental to legacy UEs that do not support on-demand SSB, because these legacy UEs may confuse the on-demand SSB with the always-on SSB (possibly having different periodicity and possibly different content). On the other hand, measuring the always-on and on-demand SSBs on different frequency locations may impose additional processing requirements on a UE.

Whether to configure the always-on and on-demand SSBs with the same or different frequency location may also depend on whether the always-on SSB is on the synchronization raster. The synchronization raster in this connection can be understood as providing fixed frequency locations (and frequency gaps) on which the UE can perform blind-detection of SSBs, thereby facilitating the blind-detection and reducing the detection effort. For instance, if the on-demand SSB is not transmitted on the frequency raster, the legacy UEs (not supported on-demand SSB) will not detect it, because they would not perform the SSB blind-detection on these frequency locations outside the frequency synchronization raster.

In the 3GPP discussion, it was exemplarily assumed that the always-on SSB is a Cell Defining (CD)-SSB. A CD-SSB can be understood as facilitating the UE to properly identify the cell (transmitting the SSB). A CD-SSB may for instance provide corresponding information to indicate where the UE may detect the system information (e.g. MIB, SIB1...).

Further to the above discussions regarding the on-demand SSB, 3GPP 5G NR is investigating the configuration of "an adaptive SSB". An adaptive SSB would be beneficial in allowing a dynamic adjustment of the transmission of SSBs by the gNB to optimize network performance, resource utilization, and energy efficiency. This concept enhances flexibility in 5G networks, especially in scenarios with varying traffic loads, user mobility, and coverage requirements.

The use of an adaptive SSB is still under discussion in 3GPP. According to one possibility, at least the periodicity of the adaptive SSB can be adapted using a plurality of SSB periodicity values. In addition or alternatively, one or more other parameters of the adaptive SSB can be adaptive, e.g., the SSB indices within a burst, or time locations, or frequency locations.

For example, one SSB configuration can be defined with several values for the SSB parameters that are adaptive, e.g. several SSB periodicity values or several time locations or several sets of SSB indices within a burst are stored in the same configuration.

As another example, plural SSB configurations could be defined with respectively one value for the SSB parameters, wherein the values of the adaptive SSB parameter may differ between the plural SSB configurations.

Moreover, although every SSB can be theoretically adaptive, in one example implementation there may be limitations. For instance, an SSB that is a cell-defining SSB might or might not be made adaptive. Similarly, an SSB which is not on the SSB sync raster might or might not be made adaptive.

### Further Improvements necessary

Accordingly, in further scenarios, for a single cell, there can be two or more sets of SSBs (e.g. one always-on SSB set, one on-demand SSB set, and one adaptive SSB set), which can be measured by a UE. In this context the different sets of SSBs can also be called different types of SSB.

In the current 3GPP specification, there is typically only one SMTC (window) configured for performing SSB-based measurements on a cell (e.g. for mobility). Exceptions for configuring more than one, e.g. up to 4, SMTC windows exist for very specific scenarios, such as the Integrated Access Backhaul (IAB) and Non-Terrestrial Networks (NTN). Due to the circumstances in these exceptional scenarios, an increased number of different SSBs for different cells respectively exist, and thus up to 4 SMTC windows can be defined by the network.

The UE may indicate the capability for performing lAB-specific measurements, with the parameter *separateSMTC-InferIAB-Support-r16* of 3GPP TS 38.306 v18.4.0: which "Indicates the support of up to 4 SMTCs configurations per frequency location, including IAB-specific SMTC window periodicities."; the parameter if set in the *Phy-Parameters* IE indicates "Supported" (see TS 38.331 v 18.4.0, section 6.3.3 "UE capability information elements").

Similarly, the UE may indicate the capability for performing NTN SSB-based measurements using the parameter *parallelSMTC-r17* of 3GPP TS 38.306 v18.4.0: which "Indicates whether the UE supports NTN SSB based RRM measurements on target cells belonging to 4 SMTC-s on a single frequency carrier. If a UE does not include this field but includes *nonTerrestrialNefwork r17,* the UE supports NTN SSB based RRM measurements on target cells belonging to 2 SMTC-s on a single frequency carrier "; the parameter can be set in the *Phy-Parameters* IE (see TS 38.331 v18.4.0, section 6.3.3 "UE capability information elements").

The current L3 measurement framework (TS 38.331) ensures that, in the *measConfig* associated with a CG Cell Group:
- for all SSB based measurements there is at most one measurement object with the same ssbFrequency;
- an smtc1 included in any measurement object with the same ssbFrequency has the same value and that an smtc2 included in any measurement object with the same ssbFrequency has the same value and that an smtc3list included in any measurement object with the same ssbFrequency has the same value and that an smtc4list included in any measurement object with the same ssbFrequency has the same value;
It means that for a certain ssbFrequency linking to the cells, one or multiple SMTC (SS/PBCH Block Measurement Timing Configuration) windows can be utilized across any measurement object with the same ssbFrequency. For example, the mentioned SSBs are all always-on (and are non-adaptive).

Therefore, for a cell, for with plural sets of SSBs are transmitted (e.g. two or more of always-on SSB and/or on-demand SSB and/or adaptive SSB), which may or may not be in the same frequency location, how the measurement framework of using SMTC windows is designed is open and under discussion. How said measurement framework is designed may depend on what is the relation between the always-on SSB and the other SSB sets (e.g. the on-demand SSB or adaptive SSB), e.g., whether the same frequency or not is used, periodicity of each type of SSB, whether time location of one SSB type is a subset/superset of the other type and so on.

In addition, for an adaptive SSB with time-domain-resource adaptation (e.g., periodicity), it is also open whether and if so how a configured SMTC window needs to be enhanced.

Furthermore, whether and how to report a UE-capability to support different kind of settings of different SSB sets (e.g. always-on SSB and on-demand SSB), and/or to support different numbers of SMTC windows and other aspects has not yet been defined to facilitate network configuration.

The inventors have therefore identified the possibility of providing an improved SSB-related procedure and parts thereof, which facilitate meeting the above needs and avoiding one or more of the disadvantages described above. The present invention relates to various solutions and variants for such improved SSB-related procedures, and especially an improved procedure for indicating a UE-capability for SSB.

### Solutions

In the following, communication devices, such as UEs, base stations (e.g. distributed unit and central unit thereof), integrated circuits and respective procedures to meet these needs will be described for the new radio access technology envisioned for the 5G mobile communication systems, but which may also be used in previous LTE-based mobile communication systems or future (e.g. 6G) mobile communication systems. In particular, while 3GPP is currently developing Rel. 19 of the 5G (-Advanced) mobile communication system, 3GPP has already started planning for the next generation, 6G, of communications systems.

Different implementations and variants of the improved SSB procedure will be explained in the following. The subsequent disclosure was facilitated by the discussions and findings as described above and may for example be based at least on part thereof.

In general, it should be noted that many assumptions have been and are made herein so as to be able to explain the principles underlying the present disclosure in a clear, concise and understandable manner. These assumptions are however to be understood merely as examples made herein for illustration purposes, which are not necessarily essential for the invention and should thus not limit the scope of the disclosure. A skilled person will be aware that the principles of the following disclosure and as laid out in the claims can be applied to different scenarios and in ways that are not explicitly described herein.

Moreover, some of the terms of the procedures, entities, layers etc. used in the following are closely related to terminology used in the current 3GPP 5G standardization (possibly also used before in LTE/LTE-A systems), even though specific terminology to be used in the context of the new radio access technology for the next communication systems (e.g. next releases of 5G or 6G) may not be fully decided yet or might finally change. Thus, terms could be changed in the future, without affecting the functioning of the respective features and solutions. Consequently, a skilled person is aware that the solutions and their scope of protection should not be restricted to particular terms exemplarily used herein for lack of newer or finally agreed terminology, but should be more broadly understood in terms of functions and concepts that underlie the solutions explained in the present disclosure.

For instance, a **mobile station** or **mobile node** or **user terminal** or **user equipment (UE)** or **communication apparatus** or **communication device** is a physical entity (physical node) within a communication network. One node may have several functional entities. Afunctional entity refers to a software or hardware module that implements and/or offers a predetermined set of functions to other functional entities of the same or another node or the network. Nodes may have one or more interfaces that attach the node to a communication facility or medium over which nodes can communicate. Similarly, a network entity may have a logical interface attaching the functional entity to a communication facility or medium over which it may communicate with other functional entities or correspondent nodes.

The term **"base station"** or **"radio base station"** here refers to a physical entity within a communication network. As with the mobile station, the base station may have several functional entities. A functional entity refers to a software or hardware module that implements and/or offers a predetermined set of functions to other functional entities of the same or another node or the network. The physical entity performs some control tasks with respect to the communication device, including one or more of scheduling and configuration. It is noted that the base station functionality and the communication device functionality may be also integrated within a single device. For instance, a mobile terminal may implement also functionality of a base station for other terminals. The terminology used in LTE is eNB (or eNodeB), while the currently used terminology for 5G NR is gNB. Moreover, the base station may also be a gNB in a Non-Terrestrial Network (NTN) NR system.

The base station can be implemented exemplarily in a split architecture, according to which a gNB can be split into a gNB-CU (Central Unit) providing support for the higher layers (e.g. RRC) and one or more gNB-DUs (Distributed Units) providing support for the lower layers (e.g. MAC, PHY).

Communication between the UE and the base station is typically standardized and may be defined by different layers, such as PHY, MAC, RRC etc. (see above background discussion).

**Fig. 7** illustrates a general, simplified and exemplary block diagram of a user equipment (also termed communication device) and a scheduling device (here exemplarily assumed to be located in the base station, e.g., the LTE eNB (alternatively termed ng-eNB) or the gNB in 5G NR). The UE and eNB/gNB are communicating with each other over a (wireless) physical channel respectively using the transceiver.

The communication device may comprise a transceiver and processing circuitry. The transceiver in turn may comprise and/or function as a receiver and a transmitter. The processing circuitry (can also be termed circuitry) may be one or more pieces of hardware such as one or more processors or any LSIs. Between the transceiver and the processing circuitry there is an input/output point (or node) over which the processing circuitry, when in operation, can control the transceiver, i.e., control the receiver and/or the transmitter and exchange reception/transmission data. The transceiver, as the transmitter and receiver, may include the RF (radio frequency) front including one or more antennas, amplifiers, RF modulators/demodulators and the like. The processing circuitry may implement control tasks such as controlling the transceiver to transmit user data and control data provided by the processing circuitry and/or receive user data and control data, which is further processed by the processing circuitry. The processing circuitry may also be responsible for performing other processes such as determining, deciding, calculating, measuring, etc. The transmitter may be responsible for performing the process of transmitting and other processes related thereto. In one example, the receiver may be responsible for performing the process of receiving and other processes related thereto, such as monitoring a channel.

The present disclosure relates to different solutions (and respective variants) of an improved SSB procedure. Improved communication devices (such as UEs), improved network devices (e.g. base stations) and improved integrated circuits are presented in connection therewith, which participate separately or together in the improved procedures. In the following, although a UE is used for the description as an example for the communication device, the description is equally applicable to a communication device. Corresponding methods for the communication device behavior and the base station behavior are provided as well. The integrated circuits may correspond to the UE and base station, and respectively their behavior.

**Fig. 8** illustrates a simplified and exemplary communication device structure according to a basic implementation of the improved SSB procedure presented in more detail below. In one example, the device structure can be implemented based on the general device structure explained in connection with Fig. 7. The various structural elements of the communication device illustrated in said Fig. 8 can be interconnected between one another e.g., with corresponding input/output nodes (not shown) e.g., in order to exchange control and user data and other signals. Although not shown for illustration purposes, the communication device may include further structural elements.

As apparent from Fig. 8, the UE may include a device capability transmitting circuitry for transmitting device capability information to another device (such as a base station). Optionally, and illustrated with dashed lines in Fig. 8, the UE may further include an SSB-configuration receiving circuitry for receiving a configuration that configures the UE with SSBs and SMTCs and include an SSB measurement circuitry for performing measurements on the configured SSB(s) using one or more SMTCs.

The processing circuitry of the general UE structure of Fig. 7 can be implemented as the above SSB measurement circuitry of Fig. 8, and can also perform further functions as will be become apparent from below. The transceiver of Fig. 7 can be implemented as the above device capability transmitting circuitry and the SSB-configuration receiving circuitry, and can also perform further functions as will become apparent from below.

One exemplary procedure is implemented by a communication device that includes the following. A transceiver of the communication device transmits device capability information to another device. The device capability information indicates a capability of the communication device to support at least any two of:
- one type or plural types of synchronization signal blocks, SSB,
- SSBs in a same frequency location or different frequency locations,
- SSBs on one or more frequency synchronization raster, and
- one or more SSB measurement timing configurations, SMTC, respectively defining a measurement time window for the UE to measure one or more SSBs.

A corresponding exemplary method comprises the following steps performed by a communication device:
transmitting device capability information to another device,
wherein the device capability information indicates a capability of the communication device to support at least any two of:
   - one type or plural types of synchronization signal blocks, SSB,
   - SSBs in a same frequency location or different frequency locations,
   - SSBs on one or more frequency synchronization raster, and
   - one or more SSB measurement timing configurations, SMTC, respectively defining a measurement time window for the UE to measure one or more SSBs.

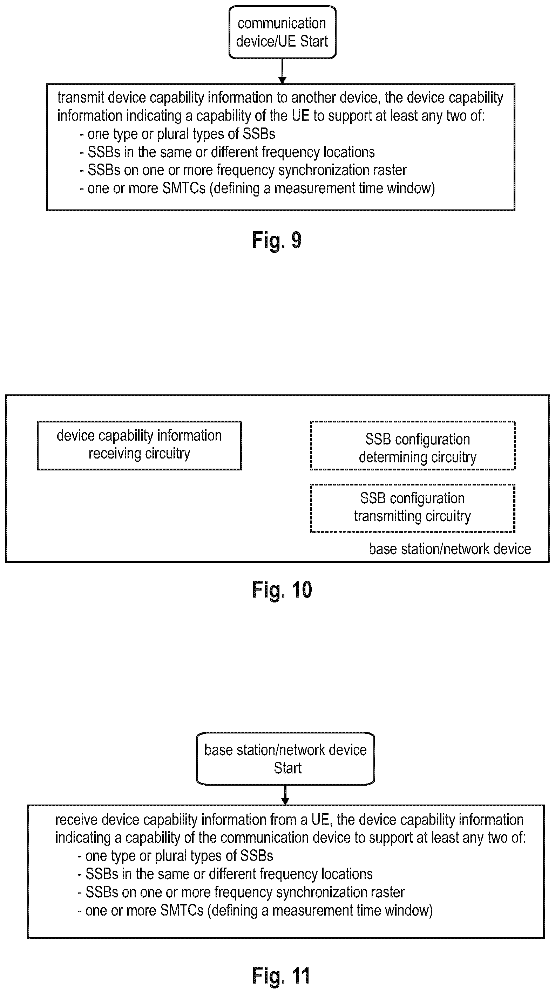

A corresponding sequence diagram for an exemplary UE behaviour in line with the above-discussed communication device and communication device method is presented in **Fig. 9****.**

The above-described improved SSB procedure at the UE facilitates achieving the objective and overcoming at least some of the drawbacks explained above. According to the above solution, a UE behaviour is clearly defined on how to indicate suitable capabilities to the network, for operating based on different SSB types that the UE supports. The device capability information can be used to facilitate the network configuration as needed. Further advantages will become apparent from the below description of implementations and variant of the improved SSB procedure.

The improved SSB procedure further provides an improved network device. **Fig. 10** illustrates a simplified and exemplary network device structure according to an exemplary implementation of the improved SSB procedure, which can be implemented based on the general device structure explained in connection with Fig. 7. The various structural elements of the network device illustrated in said Fig. 10 can be interconnected between one another e.g., with corresponding input/output nodes (not shown) e.g., in order to exchange control and user data and other signals. Although not shown for illustration purposes, the network device may include further structural elements.

As apparent therefrom, the network device comprises a device capability information receiving circuitry. Optionally, and illustrated with dashed lines in Fig. 10, the network device may further include an SSB configuration determining circuitry, and an SSB configuration transmitting circuitry.

The processing circuitry of the general network device structure of Fig. 7 can be implemented as the above SSB configuration determining circuitry of Fig. 10, and can also perform further functions as will be become apparent from below. The transceiver of Fig. 7 can function as the above device capability information receiving circuitry and the SSB configuration transmitting circuitry of Fig. 10, and can also perform further functions as will become apparent from below.

One exemplary procedure is implemented by a network device that includes the following. A transceiver of the network device receives device capability information from a communication device. The device capability information indicates a capability of the communication device to support at least any two of:
- one type or plural types of synchronization signal blocks, SSB,
- SSBs in a same frequency location or different frequency locations,
- SSBs on one or more frequency synchronization raster, and
- one or more SSB measurement timing configurations, SMTC, respectively defining a measurement time window for the UE to measure one or more SSBs.

A corresponding exemplary method comprises the following steps performed by a network device:
receiving device capability information from a communication device,
wherein the device capability information indicates a capability of the communication device to support at least any two of:
   - one type or plural types of synchronization signal blocks, SSB,
   - SSBs in a same frequency location or different frequency locations,
   - SSBs on one or more frequency synchronization raster, and
   - one or more SSB measurement timing configurations, SMTC, respectively defining a measurement time window for the UE to measure one or more SSBs.

A corresponding sequence diagram for an exemplary base station behaviour in line with the above-discussed base station and base station method is presented in **Fig. 11****.**

The above-described improved MG skipping procedure at the base station facilitates achieving the objective and overcoming at least some of the drawbacks explained above. As already explained in connection with the improved UE/communication device, a UE and network device behaviour is clearly defined on how to suitable capabilities are indicated by the UE to the network, for operating based on different SSB types that the UE supports. The device capability information can be used to facilitate the network configuration as needed. Further advantages will become apparent from the below description of implementations and variant of the improved SSB procedure.

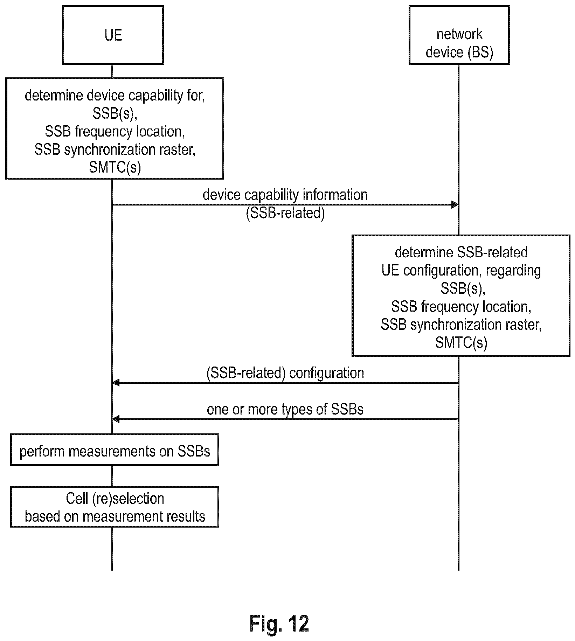

**Fig. 12** is a signaling diagram of an exemplary and simplified implementation of the improved SSB procedure, illustrating the exchange of messages between the different participating entities (here the UE (example of the communication device) and the base station (example of the network device) and the steps performed at these entities. The UE behaviour and BS behaviour follow the above-described communication device and network device structures and the respective methods.

As apparent from Fig. 12, the UE determines its device capabilities and transmits same to the base station. In turn, based on the received device capability information, the base station can determine how to configure the SSBs and SMTCs for a cell to be measured by the UE. The thus determined configuration is then transmitted to the UE. Fig. 12 also illustrates that the base station transmits the SSBs in its cell, which are received by the UE. The UE may perform measurements on the SSBs using the SMTC windows as previous configured by the base station. In the example of Fig. 12, the UE is assumed to perform cell (re)selection based on the measurement results.

In the above description of the improved SSB procedure, the device capability was described to include at least any two of the listed device capabilities (one or more SMTCs, one or more SSB types, in the same or different frequency locations and on one or more frequency synchronization raster).

According to one exemplary implementation, the types of SSB signals that the communication device can indicate in its device capability information include at least the following: the always-on SSB, the on-demand SSB and the adaptive SSB. One or a plurality of these at least three SSB types can be transmitted by the base station for each configured cell (if so configured by the base station).

The three SSB types are different from one another. The always-on SSB, once configured, is an SSB that is always transmitted by the base station for a cell. It may also be called in the present context a legacy SSB, because it refers to an SSB that is already supported in previous releases of the 3GPP standard (such as Rel. 18 and lower).

The on-demand SSB, in contrast, is not always transmitted, but is an SSB that can be transmitted by the base station for a cell when so triggered (e.g., by the base station). In other words, the SSB is only transmitted on demand; it is not transmitted by the base station when it has not been triggered.

Similar to the on-demand SSB, the adaptive SSB is also not always transmitted, but is an SSB that can be transmitted by a base station for a cell when so configured. Furthermore, the adaptive SSB is adaptive in the sense that it has one or more parameters that are adaptive, such as a transmission periodicity.

In one example, the always-on SSB can be implemented according to the 3GPP standards, e.g. as discussed above. Similarly, in one example, the on-demand SSB and the adaptive SSB can also be implemented in accordance with the present 3GPP standards and agreements, e.g. as discussed above.

One further device capability that can be indicated by the UE to a network device is whether the UE supports SSBs in one or more frequency locations (can also be called frequency position, SSB center frequency, SSB center frequency point, or simply SSB frequency or SSB position).

As explained exemplary in connection with Fig. 2, an SSB spans a frequency bandwidth around a frequency (e.g. 20 resource blocks, 240 subcarriers) in the frequency band supported by the UE. The center frequency of the SSB can, but need not be, identical to the center frequency of the whole frequency band. Consequently, the SSB(s) can be flexibly located within the whole frequency band of the UE, and different SSB frequency locations allow to adapt to diverse spectrum allocations, diverse frequency bands and deployment configurations. The device capability thus indicates whether a UE supports one or more SSBs at the same frequency location or at different frequency locations.

Another device capability that can be indicated by the UE to a network device relates to the frequency synchronization raster for an SSB supported by the UE (can also be called simply synchronization raster). In more detail, the SSB frequency position is not fixed (see above discussion on SSB frequency location) but the position can be limited to a set of possible frequency locations in each band (e.g. known as the frequency synchronization raster). If the frequency position of the SSB is yet unknown to the UE, the UE may have to perform a scanning using the frequency synchronization raster for detecting the SSB. The width of the synchronization raster (or termed scanning step) can be vary, e.g., it can be wider than the 100 kHz channel raster used in LTE, which helps to quickly locate the SSB. In conclusion, the concept of the synchronization raster is employed to efficiently search for the SSB, allowing to reduce search time and to improve UE performance compared to a (LTE's) fixed 100 kHz channel raster.

One frequency synchronization raster has been used so far in 5G NR for searching the SSBs, e.g. the always-on SSB. This frequency synchronization raster can be called for example the legacy frequency synchronization raster, because it refers to a raster that is already supported by previous releases of the 3GPP standard (such as Rel. 18 and lower). In contrast, in the new releases of the 3GPP standards (such as Rel. 19 or higher of 5G, or also for 6G etc.), another frequency synchronization raster can be used in addition or alternatively to the legacy frequency synchronization raster. Such a new frequency synchronization raster would not be visible for legacy UEs. In one example configuration, either one or more of the always on, adaptive and on-demand SSBs can be configured to be on the legacy or new frequency synchronization raster; this could be decided by the base station, e.g., taking into account how much this would impact legacy UEs.

As a result, the corresponding device capability could indicate the UE's capability to support such a new frequency synchronization raster (in addition or alternatively to the legacy frequency synchronization raster). One example implementation of a suitable device capability indication would be to indicate whether the UE supports SSBs on one or more frequency synchronization raster (e.g., indicating the number of supported frequency synchronization raster; where the number 2 would imply support of the new frequency synchronization raster). The UE may thus indicate to support e.g. the always-on SSB on the legacy frequency synchronization raster, and the on-demand SSB or adaptive SSB on a further new frequency synchronization raster.

Another example implementation of a suitable device capability indication would be to indicate whether the UE supports SSBs on the new frequency synchronization raster (e.g. a simple bit, where "1" indicates the support). For instance, the network then simply assumes that the UE is capable to process the legacy frequency synchronization raster.

According to the above improved SSB procedure, another device capability that can be indicated by the UE to a network device is whether the UE supports one or more SSB measurement timing configurations. In general, an SMTC defines a measurement time window during which the UE measures one or more SSBs (see e.g. explanations in connection with Fig. 5). The SMTC is thus closely related to the SSB configuration and determines the time when the SSB is measured.

In the above improved SSB procedure, it was exemplarily assumed that each capability is indicated in the device capability information. However, the improved SSB procedure also covers the case that only two or more of the above discussed capabilities are in fact indicated by the UE to the network device. In said case, one or two of the above discussed capabilities would not be indicated by the UE to the network. In one example implementation, without receiving an explicit capability indication, the network could assume a default value for the missing capabilities, e.g. respectively assuming the UE to only support one SSB type, to only support SSBs in a same frequency location, to only support SSBs on one (e.g. the legacy) frequency synchronization raster, and to only support one SMTC.

In one example, the device capability information may indicate two of the above discussed device capabilities, such as the support of one or a plural types of SSBs as well as the support of one or more SMTCs. Whether the UE is capable to support SSBs in the same or different frequency locations or on one or more frequency synchronization raster would not be indicated in this example. The network may however assume a default value for the not-indicated capabilities, here for instance that the UE only supports SSBs in the same frequency location and on one (e.g., the legacy) frequency synchronization raster.

In another example, the device capability information may indicate the support of one or a plural types of SSBs as well as the support of different SSB frequency locations. Whether the UE is capable to support SSBs on one or more frequency synchronization raster and whether the UE supports on or more SMTCs would not be indicated in this example. The network may however assume a default value for the not-indicated capabilities, here for instance that the UE only supports SSBs on one (e.g., the legacy) frequency synchronization raster and that the UE only supports one SMTC.

In still another example, the device capability information may indicate the support of one or a plural types of SSBs, the support of different SSB frequency locations as well as the support of one or more SMTCs. Whether the UE is capable to support SSBs on one or more frequency synchronization raster would not be indicated in this example. The network may however assume a default value for the missing frequency synchronization raster capability, here for instance that the UE only supports SSBs on one (e.g., the legacy) frequency synchronization raster.

Although only three specific examples have been given above, any other combination of two or more among the above-identified capabilities can be indicated by the UE to the network.

Moreover, in the future (e.g. 6G or beyond), it may be that all UEs are required to support an on-demand SSB and/or an adaptive SSB. In such a case, these device capabilities may be a mandatory feature of the UEs, which does not need to be indicated by the UE to the network. Thus, the network would assume such a mandatory capability, without an explicit capability indication from the UE.

In the above explanation of the improved SSB procedure, the device capability indication was presented as being applicable to the UE as a whole. In further exemplary implementations of the improved SSB procedure, one or more of the different capabilities, which can be indicated to the network, can be indicated per one or a combination of more than one of:
- a cell
- a cell group
- an operator frequency band,
- an operator frequency band combination, or
- a frequency range

This increases the flexibility of how the UE can be configured and operated, e.g. depending on the different network deployments.

For instance, the UE may indicate the capability to support plural types of SSBs for a secondary cell but only one type of SSB for another secondary cell. Similarly, the support of different SSB frequency locations can be indicated for only a particular operator frequency band (or operator frequency band combination), while the UE may indicate the support of one SSB frequency location for another operator frequency band (or operator frequency band combination). As a further example, support of the new frequency synchronization raster can be indicated for only a specific frequency range, such as one of the FR1 (0,41 - 7,125 GHz), FR2 (24,25 - 71 GHz), or another FR3.

As explained, the improved SSB procedure revolves around indicating the device capability of a UE. In one example implementation, the improved SSB procedure includes the further step of first determining the device capability information to be transmitted to the network. The UE may for instance determine its own capabilities in a usual manner, e.g., from internal information of the communication device, such as from hardware information, operator information, product information, and manufacturer information in the UE.

As explained above for the improved SSB procedure, the device capability information is transmitted to another device. In general, the device capability information can be processed at a device on the network side, e.g. at a network device such as a base station that is serving the UE (assumed in the following as an example). The device capability information can be processed for the purpose of appropriately configuring the UE, in this example configuring one or more SSBs and one or more SMTCs that the UE can use for performing measurements on the SSBs. The configuration should be in accordance with the indicated capabilities of the UE. For instance, the UE configuration can be less than but at most what is indicated by the device capability indication, i.e. not configuring more SMTCs or SSBs than capable by the UE.

Correspondingly, a suitable network device, such as a base station, determines to configure the UE, based on the received device capability information, with one or more SSBs and one or more SMTCs. In turn, the one or more SSBs can be configured with respective frequency locations (e.g. same or different frequency locations) and (or respective frequency synchronization raster (e.g. a legacy frequency synchronization raster, and/or a new Rel. 19 frequency synchronization raster).

The base station, after determining such a suitable SSB-related configuration, transmits the configuration to the UE.

Correspondingly, the UE receives from the network side, e.g. from the base station, configuration information for configuring the UE regarding SSB and SMTC. The configuration information configures the UE with one or more types of SSBs (for each type of SSB, including a respective frequency location and/or a respective frequency synchronization raster) as well as one or more SMTCs.

In a further detailed implementation of the improved SSB procedure, the thus configured SSB(s) and SMTC(s) can be used by the UE for performing measurements, particularly performing measurements on a cell based on the configured one or more SSBs using the configured one or more SMTCs. Different types of measurements can be performed by the UE. According to one example, the measurements are Layer-3 measurements (L3 measurements), processed at the RRC layer (e.g., typically used for higher-layer decisions such as handovers, cell reselection and network optimization, etc.). According to another example, the measurements are Lower-Layer measurements (e.g. L1 measurements), processed directly at the physical layer (e.g., typically used for low-level signal detection, channel estimation, initial mobility decisions, beam selection and tracking, etc.).

Depending on the status of the UE, the results of the measurements are further processed by the UE.

One possible processing is that the UE transmits a measurement report to a base station (e.g., its serving base station), including the results of the cell measurements. For instance, this may be a behaviour of a UE that is in a connected state (e.g., fully connected to the network), e.g., RRC Connected. The measurement results for instance can be used at the base station to decide on whether a handover is to be performed for the UE, and if so, to which cell.

In addition or alternative, another possible processing is that the UE uses the measurement results to perform cell selection or cell reselection to another cell. Correspondingly, a UE may select a new cell to camp on. For instance, this may be a behaviour of a UE that is in an idle or inactive state (e.g., not fully connected to the network), e.g., RRC Idle state or RRC Inactive state.

As explained above for the improved SSB procedure, the device capability information is transmitted to another device. Further, a network device, such as the base station, transmits a configuration to the UE for configuring the SSBs and SMTCs. In further exemplary implementations, these transmissions can be performed as follows. For instance, a UE can use RRC signaling to carry the device capability information, and the base station can also use RRC signaling to carry the configuration to the UE. This can be for instance the case for a UE in connected state (e.g., being in RRC Connected).

In addition or alternatively, the UE can use NAS (Non-Access Stratum) signaling to carry the device capability information, and the base station can use NAS signaling and/or SIB (System Information Broadcast) to configure the UE. This can be for instance the case for a UE in an idle or inactive state (e.g., being in RRC Idle or RRC Inactive).

As mentioned above, the UE performs measurements on the configured SSB(s) using the configured SMTC(s). The measurement triggering (or activation) signaling, triggering the UE to start the measurements for the SSBs, can be carried to the UE in different manners. For instance, the measurement triggering signaling can be one or more of: L1 (DCI) signaling, L2 (MAC) signaling, and L3 (RRC) signaling.

In the following, different implementations according to the improved SSB procedure will be presented. In brief, according to a First Implementation, the UE is configured for a cell with one SMTC and two SSB types (e.g. having the same frequency location and same frequency synchronization raster). According to a Second Implementation, the UE is configured for a cell with two SMTCs and two SSB types (e.g. having the same frequency location and same frequency synchronization raster). According to a First Variant of the Second Implementation, the UE is configured for a cell with two SMTCs and two SSB types, but having different frequency locations and optionally different frequency synchronization raster. According to a Third Implementation, the UE is configured for a cell with one adaptive SMTC and two SSB types (e.g. having the same frequency location and same frequency synchronization raster). According to a First Variant of the Third Implementation, the UE is configured for a cell with one adaptive SMTC and two SSB types having different frequency locations and optionally different frequency synchronization raster.

### First Implementation

For the First Implementation, it is exemplarily assumed that the UE reports a device capability information to the network, indicating the support of at least two SSB types and one SMTC. In an optional variant of the First Implementation, the UE may further indicate that it supports SSBs with the same or different frequency locations as well as on one (e.g., legacy) or more frequency synchronization raster.

Based on this device capability information, the base station may correspondingly configure the UE such as to meet its capabilities. According to one variant of the exemplary First Implementation, the UE is configured for a cell with one SMTC and at least two SSB types (e.g. having the same frequency location and same frequency synchronization raster). For example, the UE may be configured to measure based on the always-on SSB as well as one or more of the on-demand SSB and adaptive SSB.

Moreover, the specific details of the SSBs and SMTCs are configured as well, such as the positions of the SSBs in the frequency domain and the time domain (e.g., periodicity, offset, center frequency, etc.) as well as the position of the SMTC in the time domain (e.g., duration, periodicity, offset etc.).

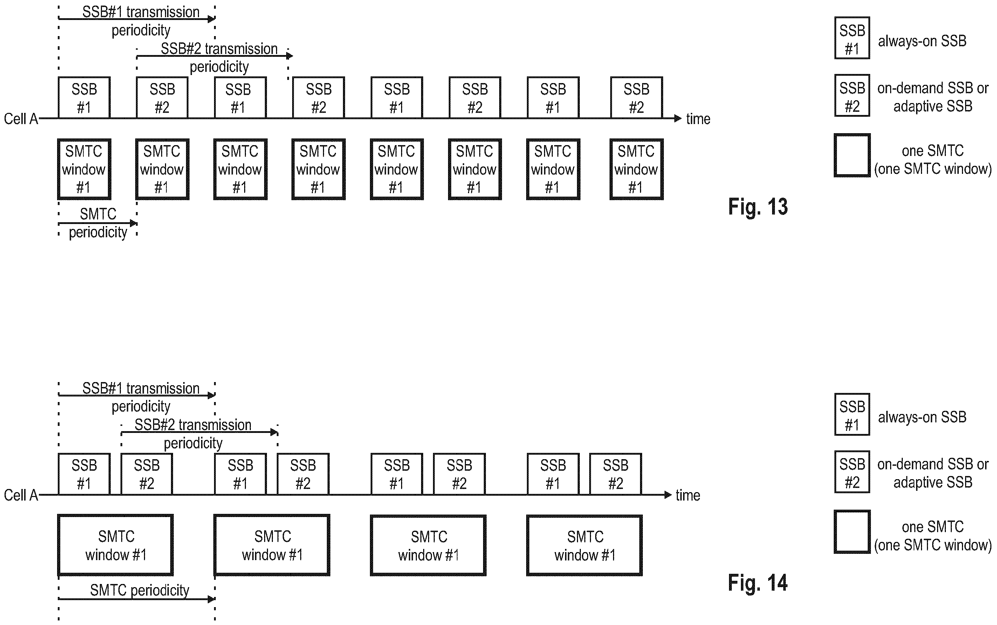

The configuration of the SSBs and SMTCs can be in a manner that the UE is allowed to measure the plural SSBs based on the one SMTC. In one variant of a possible configuration, the SSBs and the SMTC are configured such that in one SMTC window of the SMTC, one of the plural SSB types is measurable. Put differently, one SMTC window covers one SSB transmission. For instance, the duration of the SMTC window can thus match the respective SSB durations, thereby limiting the amount of time the UE the attempts to measure the SSB. One example is illustrated in Fig. 13, explained below.

In another variant of a possible configuration, the SSBs and the SMTC are configured such that in one SMTC window of the SMTC, more than one of the plural SSBs are measurable. Put differently, one SMTC window covers more than one SSB transmissions. For example, the duration of the SMTC window requires to be long enough to cover the transmission of the several SSB types. One example is illustrated in Fig. 14, explained below.

According to one example configuration of the SSBs and SMTC window as illustrated in Fig. 13, two SSB#1 and SSB#2, and one SMTC window #1 are configured for the UE to measure a cell A. The UE may be configured to measure based on the always-on SSB (here SSB#1) and either an on-demand SSB or adaptive SSB (SSB#2). The two SSBs #1 and #2 are configured with the same time periodicity but different time offsets, and the one SMTC window #1 is configured in such a manner that it allows the UE to measure both SSB#1 and SSB#2. According the example configuration of Fig. 13, the duration of the SMTC window is the same as the duration of each of the two SSBs. Alternatively, the duration of the SMTC window could be configured to be longer than the duration of each of the SSBs. The periodicity of the SMTC window is configured based on the periodicity of the SSBs. For example, the position of the SSB#1 and SSB#2 in the time domain is such that one SMTC window with a suitable periodicity covers the duration of both SSBs, e.g. by configuring the SSB#1 and SSB#2 periodicity to be the same, by configuring that the SSB#1 and SSB#2 are offset in the time domain by half of the SSB periodicity, and by configuring the one SMTC window#1 with half of the SSB periodicity. Consequently, due to the coordinated configuration of the SSBs and SMTC, the UE can perform measurements on the plural SSBs using the one SMTC window.

According to another example configuration of the SSBs and SMTC window as illustrated in Fig. 14, two SSBs #1 and #2, and one SMTC window #1 are configured. The UE may be configured to measure based on the always-on SSB (here SSB#1) and either an on-demand SSB or adaptive SSB (SSB#2). The two SSBs #1 and #2 are configured with the same time periodicity but different time offsets, and the one SMTC window #1 is configured in such a manner that it allows the UE to measure both SSB#1 and SSB#2. According the example configuration of Fig. 14, the duration of the SMTC window is long enough to cover the two SSBs. The periodicity of the SMTC window is configured based on the periodicity of the SSBs, and in this case is the same as the periodicity of SSB#1 (and SSB#2). Consequently, due to the coordinated configuration of the SSBs and SMTC, the UE can perform measurements on the plural SSBs using the one SMTC window.

One advantage of the First Implementation is that the UE, although supporting only one SMTC, is able to measure plural different SSB types for a cell. Furthermore, less changes to current 3GPP specifications are necessary. Moreover, the UE implementation is simpler, and the UE complexity and capabilities can be lowered down. On the other hand, the First Implementation puts more constraints on the configuration of the SSBs and SMTCs at the network side so as to allow to match the one SMTC to the plural SSB type transmissions. In order to support more flexible SSB time locations, the duration of the SMTC window would have to be sufficiently long, which might result in a higher UE power consumption.

### Second Implementation

For the Second Implementation, it is exemplarily assumed that the UE reports a device capability information to the network, indicating the support of at least two SSB types and at least two SMTCs. In an optional variant of the Second Implementation, the UE may further indicate that it supports SSBs with the same or different frequency locations as well as on one (e.g., legacy) or more frequency synchronization raster.

Based on this device capability information, the base station may correspondingly configure the UE such as to meet its capabilities. According to one variant of the exemplary Second Implementation, the UE is configured for a cell with two SMTCs and at least two SSB types (e.g., having the same frequency location and same frequency synchronization raster). For example, the UE may be configured to measure based on the always-on SSB as well as one or more of the on-demand SSB and adaptive SSB.

Moreover, the specific details of the SSBs and SMTCs are configured as well, such as the positions of the SSBs in the frequency domain and the time domain (e.g., periodicity, offset, center frequency, etc.) as well as the position of the SMTCs in the time domain (e.g., duration, periodicity, offset etc.).

The configuration of the SSBs and SMTCs can be in a manner that the UE is allowed to measure the plural SSBs based on the two SMTCs. In one variant of a possible configuration, one SMTC is associated with at least one of the plural SSBs. For instance, there can be a one-to-one association between one SSB type and one SMTC, respectively for the plural SSB types/SMTCs. Consequently, one SMTC window would be configured to cover one SSB transmission.

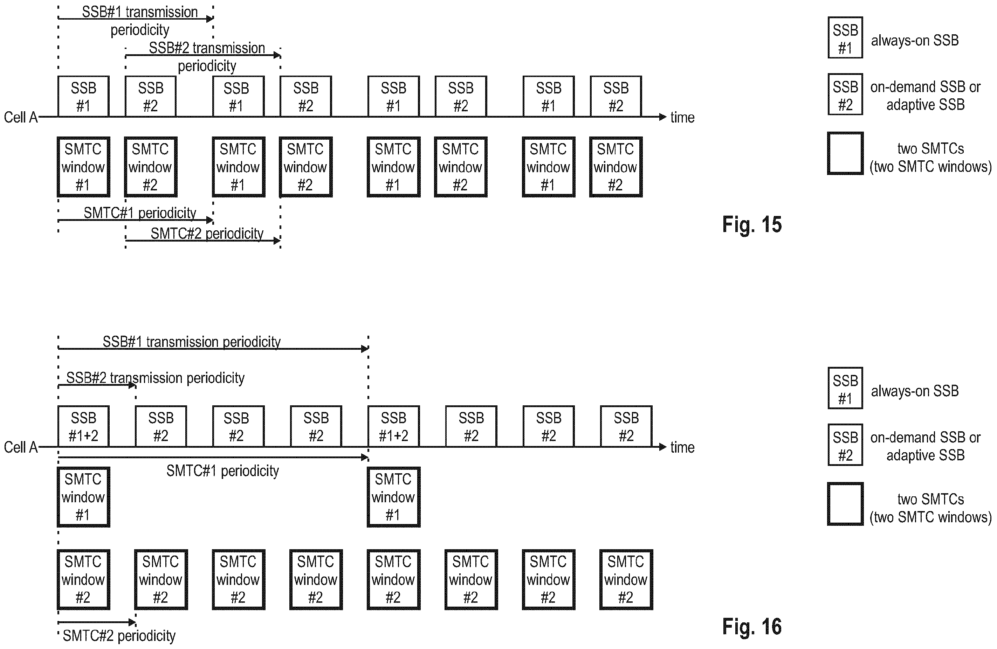

As a further optional variant of the Second Implementation, the UE may measure one SSB type using only one SMTC at a particular point in time, but may not measure two or more SSBs using respective two or more SMTC windows at the same time. In particular, the UE would be configured with the SSBs and SMTCs such that they do not occur at the same time. One example thereof is illustrated in Fig. 15, explained below.

Alternatively, the UE may measure more than one SSB type using more than one SMTC simultaneously at the same time, e.g., measure two or more SSBs using respectively two or more SMTC windows at the same time. One example thereof is illustrated in Fig. 16, explained below.

According to one example configuration of the SSBs and SMTCs as illustrated in Fig. 15, two SSB#1 and SSB#2, and two SMTC windows #1 and #2 are configured for the UE to measure a cell A. The UE may be configured to measure based on the always-on SSB (here SSB#1) and either an on-demand SSB or adaptive SSB (SSB#2). The two SSBs #1 and #2 are configured with the same time periodicity but different time offsets, so as to not overlap each other. The two SMTC windows #1 and #2 are configured in such a manner that they allow the UE to measure both SSB#1 and SSB#2. The SMTC window #1 is configured by SMTC#1 for SSB#1, and is configured to cover the duration and position of the SSB#1 in the time domain. For instance, the SMTC window #1 can be configured with the same duration (alternatively a longer duration may be possible too), same periodicity and same time offset as SSB#1.

Similarly, SMTC window #2 is configured by SMTC#2 for SSB#2, and is configured to cover the duration and position of the SSB#2 in the time domain. For instance, SMTC window #2 can be configured with the same duration (alternatively a longer duration may be possible too), same periodicity and same time offset as SSB#2. In the example of Fig. 15, the SSBs, and SMTCs, are configured such that the UE need only measure one SSB, using one SMTC, at a time.

Due to the matching configuration of the SSBs and STMCs, the UE can perform measurements on the plural SSBs using the respective SMTC windows.

According to another example configuration of the SSBs and SMTCs as illustrated in Fig. 16, two SSB#1 and SSB#2, and two SMTC windows #1 and #2 are configured for the UE to measure a cell A. Compared to the implementation of Fig 15, the UE measures two SSBs using two SMTC windows simultaneously. The UE may be configured to measure based on the always-on SSB (here SSB#1) and either an on-demand SSB or adaptive SSB (SSB#2). The two SSBs #1 and #2 are configured with the different periodicities, wherein the SSB#1 periodicity is exemplarily assumed to be a multiple of the SSB#2 periodicity, such that at regular intervals, the SSB#1 and SSB#2 occur at the same time. Put differently, the two SSBs are configured such that one SSB is a superset (or subset) of the other SSB. Correspondingly, the UE would need to measure the SSB#1 and SSB#2 in some time instances simultaneously. The two SMTC windows #1 and #2 are configured based on the SSB configuration, particularly where SMTC window #1 is configured to match SSB#1, and SMTC window #2 is configured to match SSB#2. Thus, the SMTC window #1 has a periodicity that is a multiple of the periodicity of SMTC window #2; e.g., one SMTC window is a superset (or subset) of the other SMTC window. The two SMTC windows #1 and #2 are configured in such a manner that they allow the UE to measure both SSB#1 and SSB#2, either when they occur at the same time or at different times. Due to the matching configuration of the SSBs and SMTCs, the UE can perform measurements on the plural SSBs using the respective SMTC windows.

One advantage of the Second Implementation is that there is a clear UE behaviour definition and implementation. Furthermore, the Second Implementation facilitates the configuration of the SSBs and SMTCs to exactly match each other, and thereby facilitates that the UE consumes less power.

On the other hand, there is an increased capability requirement for the UE, because the UE may have to support more SMTCs and potentially may have to be able to measure two SSBs using two SMTC windows at the same time.

### First Variant of the Second Implementation

In the following, a First Variant of the Second Implementation is presented. For this First Variant of the Second Implementation, it is again exemplarily assumed that the UE reports a device capability information to the network, indicating the support of at least two SSB types and at least two SMTCs. Furthermore, the First Variant is directed now to the case where the UE may further indicate that it supports SSBs with the different frequency locations, and may optionally also indicate that it supports a new frequency synchronization raster (in addition to the old (e.g., legacy) frequency synchronization raster).

Based on this device capability information, the base station may correspondingly configure the UE such as to meet its capabilities. According to this First Variant of the exemplary Second Implementation, the UE is configured for a cell with two SMTCs and at least two SSB types, wherein the SSBs have different frequency locations. Furthermore, the SSBs may have the same or different frequency synchronization raster. For example, the UE may be configured to measure based on the always-on SSB as well as one or more of the on-demand SSB and adaptive SSB, as already assumed above for the Second Implementation.

According to an optional behaviour, the device capability information transmitted by the UE to the network may further indicate a maximum frequency gap between the different supported frequency locations of the different SSB types. Different frequency gaps between SSBs require different frequency processing capabilities at the UE side. Thus, by additionally indicating the maximum frequency gap supported by the UE, the configuration of the SSBs may be flexible with regard to the frequency positions and may take advantage of different capabilities of the UEs.

According to the First variant of the Second Implementation, the UE is configured for a cell with two SMTCs and two SSB types, but having different frequency locations and optionally a same or different frequency synchronization raster.

As explained above for the Second Implementation, also the present configuration of the SSBs and SMTCs can be in a manner that the UE is allowed to measure the plural SSBs based on the two SMTCs. As explained already above, one SMTC is associated with at least one of the plural SSBs, and optionally there can be a one-to-one association between one SSB type and one SMTC, respectively for the plural SSB types/SMTCs.

Alternatively, the configuration of the SMTC can be per frequency. In particular, one SMTC can be directly associated with one of the different frequency locations of the configured SSBs.

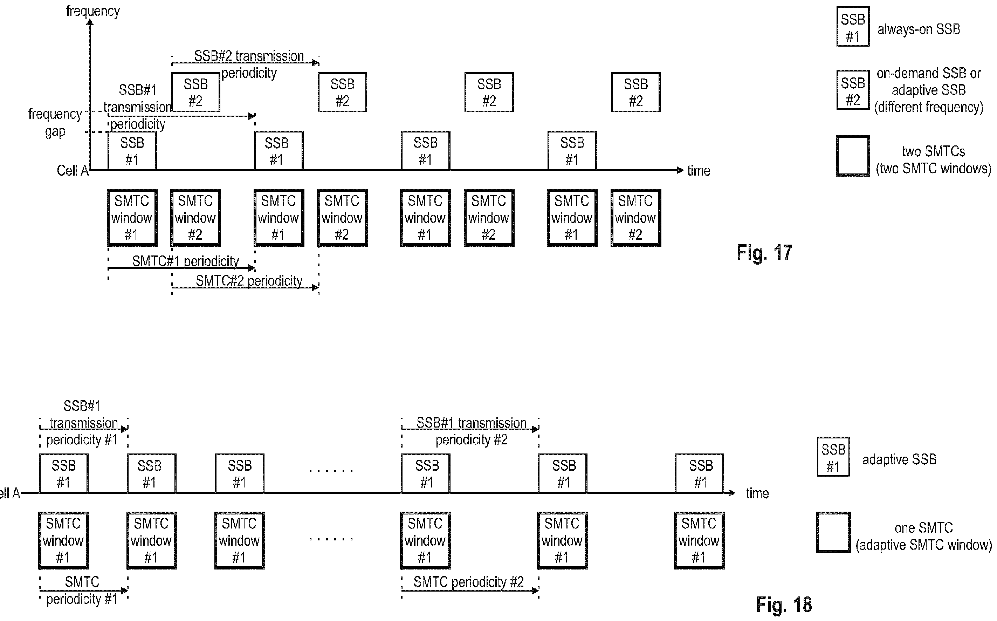

According to one example configuration of the SSBs and SMTCs as illustrated in Fig. 17, two SSB#1 and SSB#2, and two SMTC windows #1 and #2 are configured for the UE to measure a cell A. Fig. 17 is quite similar to Fig. 15 with the difference that the SSB#1 and SSB#2 are at different frequency locations. Again, the two SMTC windows #1 and #2 are configured in such a manner that they allow the UE to measure both SSB#1 and SSB#2. The SSB measurements are performed on different frequency locations, and may require the UE tune to its RF circuitry to the different frequencies before performing the measurements.

In any case, due to the matching configuration of the SSBs and SMTCs, the UE can perform measurements on the plural SSBs using the respective SMTC windows.

The configuration of the SSBs and SMTCs discussed above for Fig. 16 can be also used when the UE behaves according to the First Variant of the Second Implementation, e.g., where the SSB#1 and SSB#2 occur at the same time and the two SMTC windows #1 and #2 are configured to respectively match SSB#1, and SSB#2. Even though the plural SSBs are configured at different frequency locations, the multiple SMTC windows can be used by the UE to measure simultaneously the plural SSBs.

However, such an implementation requires that the UE measures at different frequency locations different SSBs at the same time. Measuring different SSBs at different frequency locations simultaneously might impose high capability requirement on the UE. Other, less capable, UEs might not be able to perform such measurements.

According to one sub-variant of the First Variant, the two or more SMTCs and the two or more SSB types with different frequency locations are configured such that the SMTC windows, configured for the two or more SMTCs, do not overlap in time. In order to lower the necessary ability requirement for the UE, this sub-variant limits the configuration that is possible for the SSBs (and the corresponding SMTCs) such that the various SSBs / SMTCs do not occur at the same time. This sub-variant of the First Variant is illustrated in Fig. 17.

In a further exemplary sub-variant, the same or different measurement objects can be configured for the UE for a certain cell, which is associated with two or more SSB types with different frequency locations.

### Third Implementation

For the Third Implementation, it is exemplarily assumed that the UE reports device capability information to the network, indicating the support of at least two SSB types and at least one adaptive SMTC. In an optional variant of the Third Implementation, the UE may further indicate that it supports SSBs with the same or different frequency locations as well as on one (e.g., legacy) or more frequency synchronization raster.

Correspondingly, a difference to the First and Second Implementations is the support of an adaptive SMTC. The concept of an adaptive SMTC is similar to the concept of the adaptive SSB. In one exemplary variant, the adaptive SMTC is adaptive as to one or more of the following parameters: a periodicity of the measurement time window, a duration of the measurement time window, and an offset of the measurement time window (e.g. offset with respect to the starting point of each periodicity).

Based on this device capability information, the base station may correspondingly configure the UE such as to meet the UE capabilities. According to one variant of the exemplary Third Implementation, the UE is configured for a cell with the adaptive SMTC and at least two SSB types (e.g., having the same frequency location and same frequency synchronization raster). For example, the UE may be configured to measure based on the always-on SSB as well as one or more of the on-demand SSB and adaptive SSB.

In one example of how to configure the adaptive SMTC, the network may configure one or more sets of parameters, such as different sets of a periodicity, a duration and an offset of the SMTC. The SMTC is adaptive in that it can be adapted by switching between the different parameters sets. The use of such an adaptive SMTC with different possible parameters is quite flexible, because although only one SMTC window needs to be supported by the UE, different SMTC windows can effectively be used according to the different parameter sets.

While the different parameters (sets) of the adaptive SSB can be configured by the base station, the determination of which SMTC parameters to use can be e.g., under control of the UE. In one example, the UE may determine which parameters of the adaptive SMTC to use depending on the one or more types of SSBs that the UE has to measure. In more detail, the UE may determine to use suitable parameters for being able to measure the configured SSBs, e.g., by selecting one appropriate parameter set among the plural parameters sets of the adaptive SMTC.

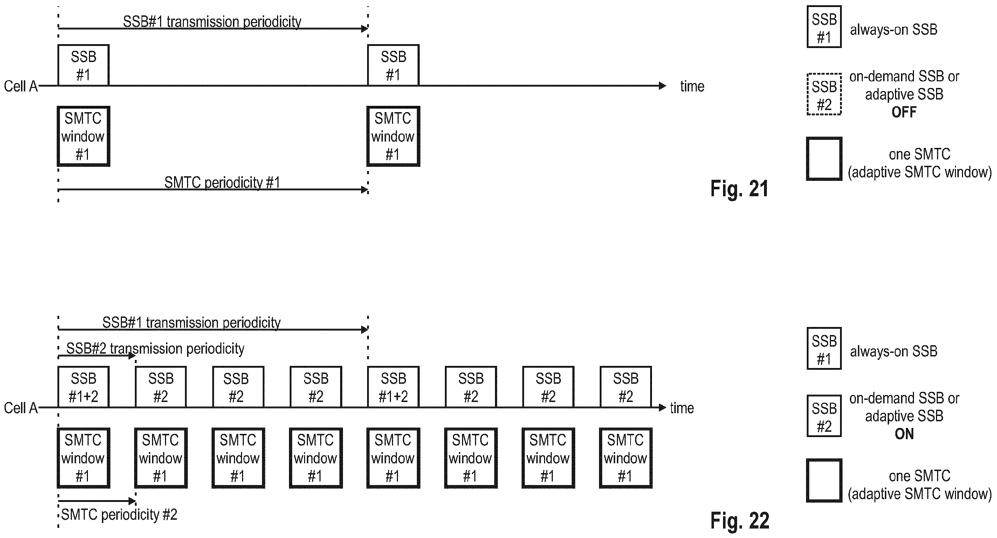

According to one variant of the Third Implementation, the UE determines to use parameters of the adaptive SMTC such that in one measurement window of the adaptive SMTC, one of the two or more SSB types is measurable (see e.g., Fig. 21, discussed below), or alternatively such that in one measurement window of the adaptive SMTC, more than one of the two or more SSB types are measurable (see e.g., Fig. 22, discussed below).

As a further example, the UE determines to use parameters of the adaptive SMTC depending on the number of SSBs to be measured by the UE, e.g., whether one or both of the plural configured SSBs are to be measured. For instance, if only one SSB is to be measured, one set of parameters of the SMTC is used, the determined parameters being appropriate to measure said one SSB. On the other hand, if two SSBs are to be measured, the UE switches to use another set of parameters of the SMTC, the determined parameters being appropriate to measure said two SSBs.

This concept of changing the parameters of the adaptive SMTC can be used to adapt the SMTC to any of the possible SSB configurations, e.g. covering one SSB (such as the always-on SSB, or the on-demand SSB, or the adaptive SSB), or covering two SSBs (such as two of among the three different SSB types discussed: the always-on SSB, on-demand SSB and adaptive SSB), or covering all three SSBs types.

One further special implementation is where the UE is configured with one adaptive SSB and one adaptive SMTC, where the respective parameters of the adaptive SSB and the adaptive SMTC may correspond to each other. Depending on the adaptive SSB transmitted by the base station, the UE may determine to adapt the parameters of the adaptive SMTC to said transmitted SSB, thereby allowing the UE to measure the SSB. Correspondingly, the UE may indicate such a capability in its device capability information to the network, particularly indicating that the UE supports the use of one adaptive SMTC and one adaptive SSB. Thereby, this implementation not only allows the flexibility of configuring and adapting SSBs for the network is high, but the processing capabilities of the UE may be kept low, because the UE only has to support measuring one (adaptive) SSB using one (adaptive) SMTC.

Such an implementation will be explained in connection with **Fig. 18****.** As apparent therefrom, the UE is configured with an adaptive SSB#1 and an adaptive SMTC#1. In the left part of Fig. 18, the SSB#1 is transmitted by the base station with a first transmission periodicity #1. The UE has determined to use SMTC window #1 based on an SMTC periodicity #1 that is the same as the SSB transmission periodicity #1. The duration of the SMTC window #1 is such that it covers the SSB#1 and thus allows the UE to measure the SSB#1.

It is further assumed that eventually the adaptive SSB transmission changes, in this example, the periodicity is increased to SSB transmission periodicity #2. The UE detects this change of the SSB periodicity (e.g. based on an indication from the base station side) and determines a suitable periodicity parameter of the adaptive SMTC#1 (e.g. from among a plurality of parameters sets). Correspondingly, on the right side of Fig. 18, the switched SSB transmission and SMTC configuration are illustrated, and the UE can keep measuring the SSB#1.

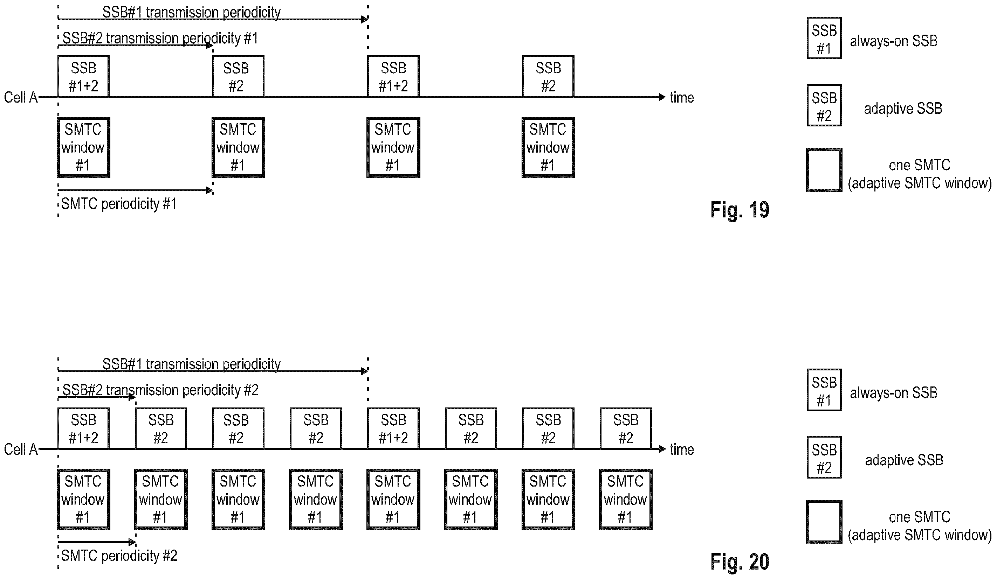

A further variant of the Third Implementation will be explained in connection with **Fig. 19 and Fig.** 20. Compared to the implementation of Fig. 18 directed to using one adaptive SSB, the present variant is based on at least two SSBs, while still using one adaptive SMTC window. Optionally, the UE may further indicate that it supports SSBs with the same or different frequency locations as well as on one or more frequency synchronization raster. The UE reports the corresponding capabilities to the network, and is accordingly configured with an always-on SSB#1 and an adaptive SSB#2 with at least two different SSB periodicities #1 and #2. The adaptive SMTC is configured as well with at least two different periodicities #1 and #2, being the same as the two periodicities for the adaptive SSB#2.

The UE determines the suitable parameters (here e.g. the periodicity) for the SMTC, depending on the parameters (here e.g. the periodicity) of the adaptive SSB#2. In particular, in case the adaptive SSB is transmitted with a periodicity #1, the UE determines to use the adaptive SMTC based on SMTC periodicity #1, which corresponds to the periodicity #1 of SSB#2. This is illustrated in Fig. 19. In this scenario, the SSB#1 transmission periodicity is a multiple of the transmission periodicity #1 of the adaptive SSB#2. The UE thus determines to use the lower periodicity of SSB#1 and SSB#2 (here periodicity #1 of adaptive SSB#2) for the SMTC window, thereby achieving to cover both SSBs. Due to the thus coordinated configuration and flexible adaptation, the UE is able to measure the two SSBs #1 and #2 using one adaptive SMTC window #1.

In case the adaptive SSB is transmitted with a periodicity #2, the UE may need to switch and determines to use the adaptive SMTC based on SMTC periodicity #2, which corresponds to the SSB periodicity #2. This is illustrated in Fig. 20. In this scenario, the SSB#1 transmission periodicity is again a multiple of the transmission periodicity #1 of the adaptive SSB#2, but a different multiple than in the above case of Fig. 19. The UE thus determines to use the lower periodicity (there periodicity #2 of adaptive SSB#2) for the SMTC window, thereby achieving to cover both SSBs. Due to the thus coordinated configuration and flexible adaptation, the UE is able to measure the two SSBs #1 and #2 using the one adaptive SMTC window #1.

As mentioned above already, the UE may determine to use parameters of the adaptive SMTC, based on the number of SSBs that are to be measured by the UE. A corresponding variant of the Third Implementation will be explained in the following in connection with **Fig. 21, Fig. 22****, and** **Fig. 23****.**

As apparent from Fig. 21, the UE is configured with an always-on SSB#1, while a second SSB#2 (such as the on-demand SSB or adaptive SSB) is not at first to be used for measuring (the SSB#2 is OFF). The corresponding SMTC window #1 is configured based on the periodicity of the always-on SSB#1. The duration of the SMTC window #1 is such that it covers the SSB#1 and thus allows the UE to measure the always-on SSB#1.

It is further assumed that eventually the second SSB#2 (e.g. the on-demand or the adaptive SSB) is triggered to be used, and the UE should perform the measurements on the two SSBs. The UE detects this activation of the second SSB#2 (the SSB#2 is ON) and adapts the adaptive SMTC by using different parameters so as to be able to measure both SSBs using the one adaptive SMTC.

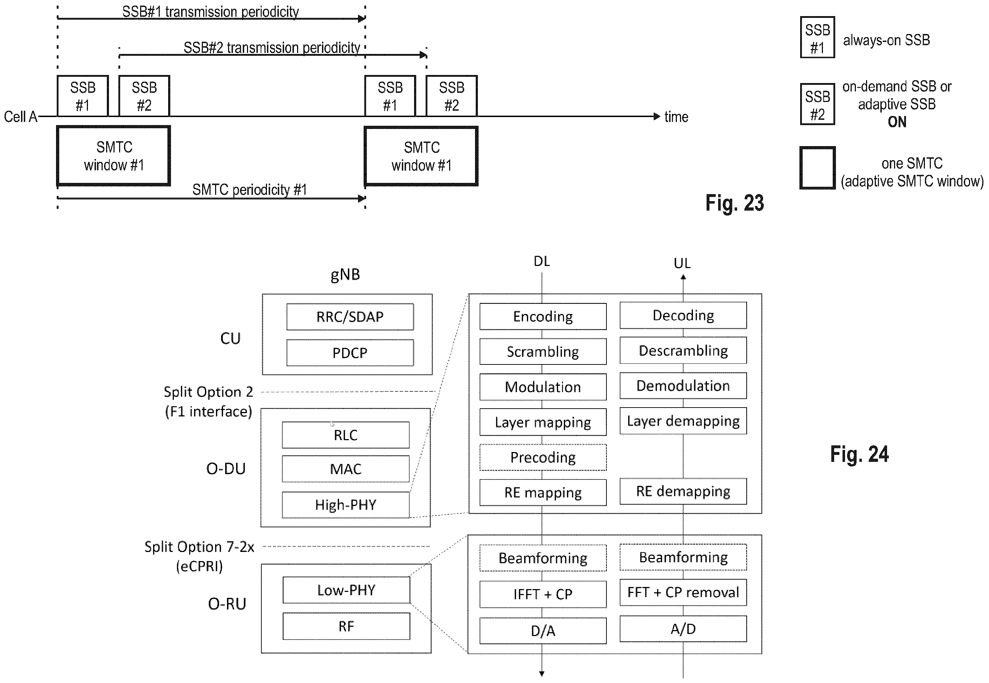

Two different sub-variants of how the UE can adapt the adaptive SMTC to the two SSBs will be explained below in connection with Fig. 22 and 23.

According to a first sub-variant, illustrated in Fig. 22, the two SSBs #1 and #2 are configured with the different periodicities, wherein the SSB#1 periodicity is exemplarily assumed to be a multiple of the SSB#2 periodicity, such that at regular intervals, the SSB#1 and SSB#2 occur at the same time (similar to Fig. 16 discussed above). Put differently, the two SSBs are configured such that one SSB is a superset (or subset) of the other SSB. The UE determines a suitable periodicity parameter of the adaptive SMTC (e.g. from among a plurality of parameters sets). Instead of using SMTC periodicity #1 (see Fig. 21), the UE switches to using the periodicity #2 of the adaptive SMTC, which in the example of Fig. 22 corresponds to the SSB#2 periodicity ( the smaller periodicity of the SSB#1 and SSB#2 periodicities). Using the thus adapted SMTC window, the UE is able to measure both SSBs #1 and #2. At those regular instances where the two SSBs occur at the same time, the UE can be measure both SSB#1 and SSB#2 simultaneously using the same adaptive SMTC window.

According to a second sub-variant, illustrated in Fig. 23, the second SSB#2 is configured to have the same periodicity as the always-on SSB#1 but with a different time offset. As apparent from the example of Fig. 23, the two SSB are assumed to be close together in time. The UE determines suitable parameters of the adaptive SMTC to cover both SSBs with one SMTC window. The duration of the SMTC window is thus switched (from the one in Fig. 21) to be long enough to cover the two SSBs in the time domain, while the periodicity of the time window of the adaptive SMTC can stay the same as before in Fig. 21.

According to the Third Implementation, an adaptive SMTC is introduced that allows the UE to adapt to different SSB scenarios. In turn, this also increases the flexibility at the network side for configuring different SSBs, allowing the opportunity for network energy saving. The use of an adaptive SMTC also allows for lowering the UE capability, because only one SMTC needs to be used by the UE at a time.

### First Variant of the Third Implementation

In the following, a First Variant of the Third Implementation is presented, which is directed to the case where SSBs with different frequency locations are configured for the UE. For this First Variant of the Third Implementation, it is again exemplarily assumed that the UE reports a device capability information to the network, indicating the support of at least two SSB types and an adaptive SMTC. Furthermore, the First Variant is directed now to the case where the UE may further indicate that it supports SSBs with different frequency locations, and may optionally also indicate that it supports a new frequency synchronization raster (in addition to the old (e.g., legacy) frequency synchronization raster).

Based on this device capability information, the base station may correspondingly configure the UE such as to meet its capabilities. According to this First Variant of the exemplary Third Implementation, the UE is configured for a cell with the adaptive SMTC and at least two SSB types, wherein the SSBs have different frequency locations (e.g. the SSBs may have the same or different frequency synchronization raster). For example, the UE may be configured to measure based on the always-on SSB as well as one or more of the on-demand SSB and adaptive SSB, as already assumed above for the Third Implementation. In one example, the adaptive SMTC can be configured with a plurality of different parameter sets, to allow a flexible adaptation of the SMTC time window.

According to an optional behaviour, the device capability information transmitted by the UE to the network may further indicate a maximum frequency gap between the different supported frequency locations of the different SSB types. This was already explained above in connection with the First Variant of the Second Implementation and applies correspondingly to the present First Variant of the Third Implementation.

As explained above for the Third Implementation, also the present configuration of the SSBs and SMTCs can be in a manner that the UE is allowed to measure the plural SSBs based on the adaptive SMTC. As explained above, the UE may determine the suitable parameters of the adaptive SMTC to use, based on the one or more types of SSBs that the UE has to measure.

The First Variant of the Third Implementation can be applied correspondingly as explained above for the Third Implementation in connection with Fig. 19-23, albeit taking into account that the plural SSBs can be configured on different frequency locations. Correspondingly, the UE is capable to measure two SSBs at different frequency locations.

The configuration of the SSBs discussed above for Fig. 20 and 22 can be also used when the UE behaves according to the First Variant of the Third Implementation, e.g. involving the SSB#1 and SSB#2 occur at the same time but at different frequency locations. Even though the plural SSBs are configured at different frequency locations, the adaptive SMTC window can be used by the UE to measure simultaneously the plural SSBs.

However, such an implementation requires that the UE measures in different frequency locations different SSBs at the same time. Measuring different SSBs at different frequency locations simultaneously (such as illustrated in Fig. 20 or 22, discussed above) might impose high capability requirement on the UE. Other, less capable, UEs might not be able to perform such measurements.

According to one sub-variant of the First Variant, the SSBs (and the corresponding adaptive SMTC) are configured such that the various SSBs / SMTCs do not occur at the same time or overlap. In order to lower the necessary capability requirement for the UE, this sub-variant thus limits the configuration that is possible for the SSBs (and the corresponding adaptive SMTC) such that the various SSBs / SMTC do not occur at the same time.

In a further exemplary sub-variant, the same or different measurement objects can be configured for the UE for a certain cell, which is associated with two or more SSB types with different frequency locations.

### Further Implementations

The above First to Third implementations and their variants were described assuming that the UE indicates its capabilities to the network, including the capabilities regarding the support of a number of a set or type of SSBs, support of the same or different frequency locations for the SSBs, the support of the frequency synchronization raster for the SSBs, and the number of SMTCs.

In a further implementation, the UE also indicates its support for processing the same or different SSB indices within an SSB burst. In more detail, an SSB burst is understood as a group of SSBs transmitted within a certain time period and is typically used for beam sweeping. An SS burst set comprises a set of SSB, where each SSB can be potentially transmitted on a different beam. The SSBs in the SS burst can be transmitted in a time-division multiplexing fashion.

The maximum number of SSBs L_{Max} within an SS burst set typically depends on the carrier frequency/band, e.g. 4 maximum SSBs for carrier frequencies < 3GHz, 8 maximum SSBs for carrier frequencies between 3GHz and 6GHz, and 64 maximum SSBs for carrier frequencies above 6 GHz. Each SSB has an index with an increasing number from 0 to the maximum number L_{Max}-1. In brief, the number of SSBs in a burst may depend on factors such as the frequency band and the deployment scenario, wherein each SSB in a burst can be identified by an SSB index.

According to this further implementation, a UE might indicate that it supports the same or different SSB indices within an SSB burst for different set of SSBs or different type of SSBs. A UE that is not capable to process different SSB indices within an SSB burst may need to reprocess the same SSB index, while a more capable UE can handle a larger number of SSB indices at the same time.

According to another different implementation, the mentioned device capability information to be transmitted from the UE to the network can be carried in suitable information elements, for instance the same or similar to the above-discussed IAB and NTC information elements *separateSMTC-InterIAB-Support-r16* and *parallelSMTC-r17.*

According to still another different implementation, the network can internally coordinate via the interfaces X2/XN, or S1/NG, for the mentioned UE capability and related SSB and/or SMTC.

### Further Implementation Details

### RRC connection setup and reconfiguration procedures

Interactions between a UE, gNB, and AMF (a 5GC entity) in the context of a transition of the UE from RRC_IDLE to RRC_CONNECTED for the NAS (Non-Access Stratum) part are described (see 3GPP TS 38.300).

RRC is a higher layer signaling (protocol) used for UE and gNB configuration. In particular, this transition involves that the AMF prepares the UE context data (including e.g. PDU session context, the Security Key, UE Radio Capability and UE Security Capabilities, etc.) and sends it to the gNB with the INITIAL CONTEXT SETUP REQUEST. Then, the gNB activates the AS security with the UE, which is performed by the gNB transmitting to the UE a SecurityModeCommand message and by the UE responding to the gNB with the SecurityModeComplete message. Afterwards, the gNB performs the reconfiguration to setup the Signaling Radio Bearer 2, SRB2, and Data Radio Bearer(s), DRB(s) by means of transmitting to the UE the RRCReconfiguration message and, in response, receiving by the gNB the RRCReconfigurationComplete from the UE. For a signalling-only connection, the steps relating to the RRCReconfiguration are skipped since SRB2 and DRBs are not setup. Finally, the gNB informs the AMF that the setup procedure is completed with the INITIAL CONTEXT SETUP RESPONSE.

In the present disclosure, thus, an entity (for example AMF, SMF, etc.) of a 5th Generation Core (5GC) is provided that comprises control circuitry which, in operation, establishes a Next Generation (NG) connection with a gNodeB, and a transmitter which, in operation, transmits an initial context setup message, via the NG connection, to the gNodeB to cause a signaling radio bearer setup between the gNodeB and a user equipment (UE). In particular, the gNodeB transmits a Radio Resource Control, RRC, signaling containing a resource allocation configuration information element to the UE via the signaling radio bearer. The UE then performs an uplink transmission or a downlink reception based on the resource allocation configuration.

### QoS control

The 5G QoS (Quality of Service) model is based on QoS flows and supports both QoS flows that require guaranteed flow bit rate (GBR QoS flows) and QoS flows that do not require guaranteed flow bit rate (non-GBR QoS Flows). At NAS level, the QoS flow is thus the finest granularity of QoS differentiation in a PDU session. A QoS flow is identified within a PDU session by a QoS flow ID (QFI) carried in an encapsulation header over NG-U interface.

For each UE, 5GC establishes one or more PDU Sessions. For each UE, the NG-RAN establishes at least one Data Radio Bearers (DRB) together with the PDU Session, and additional DRB(s) for QoS flow(s) of that PDU session can be subsequently configured (it is up to NG-RAN when to do so). The NG-RAN maps packets belonging to different PDU sessions to different DRBs. NAS level packet filters in the UE and in the 5GC associate UL and DL packets with QoS Flows, whereas AS-level mapping rules in the UE and in the NG-RAN associate UL and DL QoS Flows with DRBs.

### Open-RAN

The base station described in each exemplary embodiment (for example, a 5G NR base station called gNB) may be formed of three functional modules: Centralized Unit (CU), Distributed Unit (DU), and Radio Unit (RU).

CU may also be referred as, for example, a centralized node, an aggregated node, a centralized station, an aggregated station, or a central unit. DU may also be referred as, for example, O-DU (O-RAN Distributed Unit), a distributed node, a distributed station, or a distributed unit. RU may also be referred as, for example, O-RU (O-RAN Radio Unit), a radio apparatus, a radio node, a radio station, an antenna unit, or a radio unit.

Several split options are defined for the functional split configuration (or functional split point) between CU, DU, and RU. The term "functional split point" may also be referred to as "split", "option", or "split option".

Examples of the "split option" include the following split options 1 to 8. The functionality of the base station described in each exemplary embodiment may be split into functions as CU, DU, and RU by one of the following split options 1 to 8. For example, each of CU, DU, and RU may be subjected to functional splitting or functional splitting only between CU and DU or only between DU and RU is possible.
(1) Split Option 1: between RRC (radio resource control) and PDCP
(2) Split Option 2: between PDCP and RLC (High-RLC)
(3) Split Option 3: between High-RLC and Low-RLC
(4) Split Option 4: between RLC (Low-RLC) and MAC (High-MAC)
(5) Split Option 5: between High-MAC and Low-MAC
(6) Split Option 6: between MAC (Low-MAC) and PHY (High-PHY)
(7) Split Option 7: between High-PHY and Low-PHY
(8) Split Option 8: between PHY (Low-PHY) and RF

The functional split point between CU and O-DU may be Split Option 2. The link between CU and O-DU is referred to as midhaul, and the F1 interface is defined by the 3GPP. Further, the link between O-DU and O-RU is referred to as fronthaul and its functional split point may be Split Option 7-2x adopted as the O-RAN fronthaul specifications.

**FIG. 24** illustrates an example in which the base station functionality of the gNB is subjected to functional splitting into CU, O-DU, O-RU by Split Option 2 and Split Option 7-2x.

CU may include, for example, an RRC (radio resource control) function, an SDAP (service data adaptation protocol) function, and a PDCP (packet data convergence protocol) function.

O-DU may include, for example, an RLC (radio link control) function, a MAC function, and a higher physical layer (HIGH-PHY) function. Further, the HIGH-PHY function may include an encoding function, a scrambling function, a modulation function, a layer mapping function, a precoding function, and an RE (resource element) mapping function for downlink (DL) transmission. The HIGH-PHY function may also include a decoding function, a descrambling function, a demodulation function, a layer demapping function, and an RE (resource element) demapping function for uplink (UL) reception.

O-RU may include, for example, a LOW-PHY function and an RF function. Further, the LOW-PHY function may include a beamforming function, IFFT (Inverse Fast Fourier Transform) + CP (Cyclic Prefix) addition functions, and a D/A (Digital to Analog) conversion function for downlink transmission. Further, the LOW-PHY function may include an A/D (Analog to Digital) conversion function, CP removal + FFT (Fast Fourier Transform) functions, and a beamforming function for uplink reception.

Note that, in a case where O-DU does not include the precoding function, O-RU may include the precoding function.

O-RU may include an LBT (listen before Talk)-related function.

eCPRI (Evolved Common Public Radio Interface) is defined as a communication scheme between O-DU and O-RU in Split Option 7-2x.

In Split Option 7-2x, a sampling sequence of the in-phase (I) and quadrature (Q) components of an OFDM signal in the frequency domain as well as information used for beamforming in the antenna, a time synchronization signal, and the like are transmitted and received by eCPRI.

Information transmitted by signals (PDCCH, PUCCH, PDSCH, PUSCH, MAC CE, RRC, and the like) described in each exemplary embodiment may be transmitted by using the User Plane (U-Plan) or Control Plane (C-Plane) of eCPRI between O-DU and O-RU.

In a case where a function described in each exemplary embodiment is executed in O-RU by function splitting, O-DU may control O-RU by transmitting information for controlling the function by means of a control signal (for example, eCPRI) between O-DU and O-RU.

In a case where a function described in each exemplary embodiment is executed by function splitting in O-DU, O-RU may receive a result of the execution of the function in O-DU by means of a control signal (for example, eCPRI) and may control O-RU based on the received result.

CU, O-DU, and O-RU may be deployed in physically different apparatuses, the respective functions of which are connected by optical fibers or the like, or some or all of the functions may be deployed in a physically identical apparatus.

CU and O-DU may be logical entities implemented as software operating on a server, such as a cloud, as a virtual Radio Access Network (vRAN). Further, some or all of the functions of CU and O-DU may be provided as services of a Network Functions Virtualization (NFV) function.

The transceiver may not be a radio transceiver and may be, for example, a network transceiver, an optical transceiver, or the like. The radio resource allocated by O-DU may be a resource for radio communication between O-RU and the UE.

### Subband non-overlapping full duplex - SBFD

Operations on uplink, downlink, and sidelink symbols in one exemplary embodiment of the present disclosure may be applied to symbols (for example, SBFD (Subband non-overlapping full duplex) symbols, Subband full duplex) on which an SBFD operation or control is performed. For SBFD symbols, the frequency domain (or frequency resource or frequency bandwidth) is divided into a plurality of frequency domains (also referred to as, for example, sub-bands, RB sets, subbandwidths, or sub-BWPs (Bandwidth parts)). The terminal performs transmission and reception in a direction (for example, a downlink or uplink direction) in units of sub-bands that are the divided domains. For SBFD symbols, the terminal may perform transmission/reception in one direction of uplink and downlink directions, and may not perform transmission/reception in the other direction. The base station, on the other hand, may be capable of performing both uplink and downlink transmissions/receptions simultaneously. SBFD symbols may have a fewer frequency domain usable for downlink compared to symbols for which only downlink transmission/reception is performed. Further, SBFD symbols may have a fewer frequency domain usable for uplink compared to symbol for which only uplink transmission/reception is performed.

Further, for SBFD symbols, the terminal may perform uplink and downlink transmissions/receptions simultaneously. At this time, the frequency domain transmitted by the terminal and the frequency domain received by the terminal may not be adjacent and a frequency interval (also referred to as a frequency gap) may be provided therebetween.

Further, sidelink transmission/reception may also be included as a transmission/reception direction in units of sub-bands which are the divided domains.

### XDD - Cross Division Duplex

Operations on uplink, downlink, and sidelink symbols in one exemplary embodiment of the present disclosure may be applied to symbols (for example, Full duplex symbols) on which a Full duplex operation or control is performed. For Full duplex symbols, both the terminal and the base station are capable of performing uplink and downlink transmissions/receptions simultaneously. For Full duplex symbols, the terminal and the base station may operate to perform transmission/reception simultaneously in available frequency domains (or frequency resources or frequency bandwidths) or may operate to perform transmission/reception simultaneously in one or some of frequency domains (that is, may operate to perform transmission or reception in the other frequency domains). At this time, the frequency domain transmitted by the base station or the terminal and the frequency domain received by the base station or the terminal may not be adjacent and a frequency interval (also referred to as a frequency gap) may be provided therebetween. Further, for example, for the purpose of reduction in interference or the like, one of the terminal and the base station may operate to perform transmission/reception simultaneously (that is, the other may operate to perform transmission or reception).

Further, the Full Duplex operation may be applied to an operation in which the terminal is capable of performing sidelink transmission/reception simultaneously. Further, the Full Duplex operation may be applied to an operation in which the terminal is capable of performing sidelink transmission/reception and uplink or downlink transmission/reception simultaneously.

### Further Variants, including Hardware and Software Implementation of the present disclosure

In the following, variants of the present disclosure will be described.

### (Control Signals)

In the present disclosure, the downlink control signal (information) related to the present disclosure may be a signal (information) transmitted through PDCCH of the physical layer or may be a signal (information) transmitted through a MAC Control Element (CE) of the higher layer or the RRC. The downlink control signal may be a pre-defined signal (information).

The uplink control signal (information) related to the present disclosure may be a signal (information) transmitted through PUCCH of the physical layer or may be a signal (information) transmitted through a MAC CE of the higher layer or the RRC. Further, the uplink control signal may be a pre-defined signal (information). The uplink control signal may be replaced with uplink control information (UCI), the 1st stage sidelink control information (SCI) or the 2nd stage SCI.

### (Base Station)

In the present disclosure, the base station may be a Transmission Reception Point (TRP), a clusterhead, an access point, a Remote Radio Head (RRH), an eNodeB (eNB), a gNodeB (gNB), a Base Station (BS), a Base Transceiver Station (BTS), a base unit or a gateway, for example. Further, in side link communication, a terminal may be adopted instead of a base station. The base station may be a relay apparatus that relays communication between a higher node and a terminal. The base station may be a roadside unit as well.

### (Uplink/Downlink/Sidelink)

The present disclosure may be applied to any of uplink, downlink and sidelink.

The present disclosure may be applied to, for example, uplink channels, such as PUSCH, PUCCH, and PRACH, downlink channels, such as PDSCH, PDCCH, and PBCH, and side link channels, such as Physical Sidelink Shared Channel (PSSCH), Physical Sidelink Control Channel (PSCCH), and Physical Sidelink Broadcast Channel (PSBCH).

PDCCH, PDSCH, PUSCH, and PUCCH are examples of a downlink control channel, a downlink data channel, an uplink data channel, and an uplink control channel, respectively. PSCCH and PSSCH are examples of a sidelink control channel and a sidelink data channel, respectively. PBCH and PSBCH are examples of broadcast channels, respectively, and PRACH is an example of a random access channel.

### (Data Channels/Control Channels)

The present disclosure may be applied to any of data channels and control channels. The channels in the present disclosure may be replaced with data channels including PDSCH, PUSCH and PSSCH and/or control channels including PDCCH, PUCCH, PBCH, PSCCH, and PSBCH.

### (Reference Signals)

In the present disclosure, the reference signals are signals known to both a base station and a mobile station and each reference signal may be referred to as a Reference Signal (RS) or sometimes a pilot signal. The reference signal may be any of a DMRS, a Channel State Information - Reference Signal (CSI-RS), a Tracking Reference Signal (TRS), a Phase Tracking Reference Signal (PTRS), a Cell-specific Reference Signal (CRS), and a Sounding Reference Signal (SRS).

### (Time Intervals)

In the present disclosure, time resource units are not limited to one or a combination of slots and symbols, and may be time resource units, such as frames, superframes, subframes, slots, time slot subslots, minislots, or time resource units, such as symbols, Orthogonal Frequency Division Multiplexing (OFDM) symbols, Single Carrier-Frequency Division Multiplexing Access (SC-FDMA) symbols, or other time resource units. The number of symbols included in one slot is not limited to any number of symbols exemplified in the embodiment(s) described above, and may be other numbers of symbols.

### (Frequency Bands)

The present disclosure may be applied to any of a licensed band and an unlicensed band.

### (Communication)

The present disclosure may be applied to any of communication between a base station and a terminal (Uu-link communication), communication between a terminal and a terminal (Sidelink communication), Vehicle to Everything (V2X) communication, and communication between an Ambient IoT Reader and an Ambient IoT Device. The channels in the present disclosure may be replaced with PSCCH, PSSCH, Physical Sidelink Feedback Channel (PSFCH), PSBCH, PRDCH (Physical Reader-to-Device Channel), PDRCH (Physical Device-to-Reader Channel), PDCCH, PUCCH, PDSCH, PUSCH, and PBCH. For example, control information of the present disclosure may be replaced with any of DCI, UCI, SCI (Sidelink Control Information), R2D Control Information and D2R Control Information.

In addition, the present disclosure may be applied to any of a terrestrial network or a network other than a terrestrial network (NTN: Non-Terrestrial Network) using a satellite or a High Altitude Pseudo Satellite (HAPS). In addition, the present disclosure may be applied to a network having a large cell size, and a terrestrial network with a large delay compared with a symbol length or a slot length, such as an ultra-wideband transmission network.

### (Antenna Ports)

An antenna port refers to a logical antenna (antenna group) formed of one or more physical antenna(s). That is, the antenna port does not necessarily refer to one physical antenna and sometimes refers to an array antenna formed of multiple antennas or the like. For example, it is not defined how many physical antennas form the antenna port, and instead, the antenna port is defined as the minimum unit through which a terminal is allowed to transmit a reference signal. The antenna port may also be defined as the minimum unit for multiplication of a precoding vector weighting.

### (Ambient loT)

The terminal and the base station in one exemplary embodiment of the preset disclosure may be replaced with any of an Ambient IoT Device or an Ambient IoT Reader.

The Ambient IoT Device may be a wireless communication device having a backscattering function or having a transmission/reception bandwidth of several resource blocks or less. Further, the Ambient IoT Reader may be a wireless communication device having a communication function with an Ambient IoT Device. The Ambient IoT Device may also be referred to as an Ambient IoT terminal, an IoT terminal, an LPWA terminal, or a Tag.

Further, the various embodiments may also be implemented by means of software modules, which are executed by a processor or directly in hardware. Also a combination of software modules and a hardware implementation may be possible. The software modules may be stored on any kind of computer readable storage media, for example RAM, EPROM, EEPROM, flash memory, registers, hard disks, CD-ROM, DVD, etc. It should be further noted that the individual features of the different embodiments may individually or in arbitrary combination be subject matter to another embodiment.

It would be appreciated by a person skilled in the art that numerous variations and/or modifications may be made to the present disclosure as shown in the specific embodiments. The present embodiments are, therefore, to be considered in all respects to be illustrative and not restrictive.

The present disclosure can be realized by software, hardware, or software in cooperation with hardware. Each functional block used in the description of each embodiment described above can be partly or entirely realized by an LSI such as an integrated circuit, and each process described in the each embodiment may be controlled partly or entirely by the same LSI or a combination of LSIs. The LSI may be individually formed as chips, or one chip may be formed so as to include a part or all of the functional blocks. The LSI may include a data input and output coupled thereto. The LSI here may be referred to as an IC, a system LSI, a super LSI, or an ultra LSI depending on a difference in the degree of integration. However, the technique of implementing an integrated circuit is not limited to the LSI and may be realized by using a dedicated circuit, a general-purpose processor, or a special-purpose processor. In addition, a FPGA (Field Programmable Gate Array) that can be programmed after the manufacture of the LSI or a reconfigurable processor in which the connections and the settings of circuit cells disposed inside the LSI can be reconfigured may be used. The present disclosure can be realized as digital processing or analogue processing. If future integrated circuit technology replaces LSIs as a result of the advancement of semiconductor technology or other derivative technology, the functional blocks could be integrated using the future integrated circuit technology. Biotechnology can also be applied. Computer-readable medium may be employed to implement the present disclosure, such as a memory storing instructions executable by processing circuitry, or storing other information, configuration registers storing configuration settings, etc., and various combinations thereof.

The present disclosure can be realized by any kind of apparatus, device or system having a function of communication, which is referred to as a communication apparatus.

The communication apparatus may comprise a transceiver and processing/control circuitry. The transceiver may comprise and/or function as a receiver and a transmitter. The transceiver, as the transmitter and receiver, may include an RF (radio frequency) module including amplifiers, RF modulators/demodulators and the like, and one or more antennas.

Some non-limiting examples of such a communication apparatus include a phone (e.g., cellular (cell) phone, smart phone), a tablet, a personal computer (PC) (e.g., laptop, desktop, netbook), a camera (e.g., digital still/video camera), a digital player (digital audio/video player), a wearable device (e.g., wearable camera, smart watch, tracking device), a game console, a digital book reader, a telehealth/telemedicine (remote health and medicine) device, and a vehicle providing communication functionality (e.g., automotive, airplane, ship), and various combinations thereof.

The communication apparatus is not limited to be portable or movable, and may also include any kind of apparatus, device or system being non-portable or stationary, such as a smart home device (e.g., an appliance, lighting, smart meter, control panel), a vending machine, and any other "things" in a network of an "Internet of Things (IoT)".

The communication may include exchanging data through, for example, a cellular system, a wireless LAN system, a satellite system, etc., and various combinations thereof.

The communication apparatus may comprise a device such as a controller or a sensor which is coupled to a communication device performing a function of communication described in the present disclosure. For example, the communication apparatus may comprise a controller or a sensor that generates control signals or data signals which are used by a communication device performing a communication function of the communication apparatus.

The communication apparatus also may include an infrastructure facility, such as a base station, an access point, and any other apparatus, device or system that communicates with or controls apparatuses such as those in the above non-limiting examples.

### Further Aspects

According to a first aspect, a communication device is provided that includes the following. A transceiver of the communication device transmits device capability information to another device. The device capability information indicates a capability of the communication device to support at least any two of:
- one type or plural types of synchronization signal blocks, SSB,
- SSBs in a same frequency location or different frequency locations,
- SSBs on one or more frequency synchronization raster, and
- one or more SSB measurement timing configurations, SMTC, respectively defining a measurement time window for the UE to measure one or more SSBs.

According to a second aspect provided in addition to the first aspect, the types of SSB signals include always-on SSB, on-demand SSB, and adaptive SSB. In an optional implementation, the always-on SSB, once configured, is an SSB always transmitted by a base station for a cell. In another optional implementation, the on-demand SSB is an SSB that can be transmitted by a base station for a cell when triggered. In still another optional implementation, the adaptive SSB is an SSB that can be transmitted by a base station for a cell and has one or more SSB parameters that are adaptive, such as a transmission periodicity of the adaptive SSB.

According to a third aspect provided in addition to the first or second aspects, the device capability information indicates that the communication device supports
- one SMTC, and
- two or more types of SSBs.

In an optional implementation, the device capability information further indicates that the communication device supports SSBs with respectively a same frequency location. In a further optional implementation, the device capability information further indicates that the communication device supports SSBs on one frequency synchronization raster. In another optional implementation, the transceiver receives configuration information from a base station according to which the SMTC and SSBs are configured such that:
- in one measurement time window of the SMTC, one of the two or more SSB types are measurable separately, or
- in one measurement time window of the SMTC, more than one of the two or more SSB types are measurable.

According to a fourth aspect, provided in addition to any one of the first to third aspects, the device capability information indicates that the communication device supports
- two or more SMTCs, and
- two or more types of SSBs.

In an optional implementation, the device capability information further indicates that the communication device supports SSBs with respectively a same frequency location. In another optional implementation, the device capability information further indicates that the communication device supports SSBs on one frequency synchronization raster. In still another optional implementation, the transceiver receives configuration information from a base station according to which the SMTCs and SSBs are configured such that one SMTC is associated with at least one SSB type. In a further optional implementation, the communication device is configured to measure one SSB type using only one SMTC at a time or to measure more than one SSB type using more than one SMTC simultaneously at a time.

According to a fifth aspect, provided in addition to the fourth aspect, the device capability information indicates that the communication device supports
- two or more types of SSBs with respectively different frequency locations.

In an optional implementation, the device capability information further indicates that the communication device supports SSBs on one or more frequency synchronization raster. In another optional implementation, the device capability information further indicates a maximum frequency gap between the different supported frequency locations of the different SSB types. In still another optional implementation, the two or more SMTCs associated with the two or more SSB types with different frequency locations are configured such that the measurement time windows configured for the two or more SMTCs do not overlap in time.

According to a sixth aspect, provided in addition to any one of the first to fifth aspects, the device capability information indicates that the communication device supports
- one adaptive SMTC, and
- two or more types of SSBs.

In an optional implementation, the device capability information further indicates that the communication device supports SSBs with respectively a same frequency location. In another optional implementation, the device capability information further indicates that the communication device supports SSBs on one frequency synchronization raster. In still another optional implementation, the adaptive SMTC is adaptive as to one or more of the following parameters: a periodicity of the measurement time window, a duration of the measurement time window, and an offset of the measurement time window. In still another optional implementation, the transceiver receives configuration information from a base station regarding the one adaptive SMTC and the two or more SSB types, including a plurality of parameters of the adaptive SMTC. In an optional implementation, processing circuitry of the communication device determines which parameters of the adaptive SMTC to use, based on the configured two or more types of SSBs. In an optional implementation, the processing circuitry determines to use parameters of the adaptive SMTC such that:
- in one measurement window of the one adaptive SMTC, one of the two or more SSB types are measurable, or
- in one measurement window of the one adaptive SMTC, more than one of the two or more SSB types are measurable.

According to a seventh aspect, provided in addition to the sixth aspect, the two or more types of SSBs include at least one always-on SSB and an on-demand SSB. The processing circuitry determines to use parameters of the adaptive SMTC depending on whether one or both of the always-on SSB and on-demand SSB are to be measured. The two or more types of SSBs include at least one always-on SSB and an adaptive SSB. The processing circuitry determines to use parameters of the adaptive SMTC that correspond to parameters of the adaptive SSB, such as one or more of a corresponding periodicity, a corresponding duration or a corresponding offset.

According to an eighth aspect, provided in addition to any one of the first to seventh aspects, the device capability information indicates that the communication device supports
- one adaptive SMTC, and
- one adaptive SSB.

In an optional implementation, a processing circuitry determines to use parameters of the adaptive SMTC that correspond to parameters of the adaptive SSB, such as one or more of a corresponding periodicity, a corresponding duration or a corresponding offset.

According to a ninth aspect, provided in addition to any one of claims 6 to 8, the device capability information indicates that the communication device supports two or more types of SSBs with respectively different frequency locations. In an optional implementation, the device capability information further indicates that the communication device supports SSBs on one or more synchronization frequency raster. In an optional implementation. In an optional implementation, the device capability information further indicates a maximum frequency gap between the different supported frequency locations of the different SSB types.

According to a tenth aspect, provided in addition to any one of the first to ninth aspects, the transceiver receives configuration information from the a station, the configuration information configuring any one or any combination of:
- one or more types of SSBs, including respective frequency locations of the SSBs and/or respective frequency synchronization raster, and
- one or more SMTCs.

According to an eleventh aspect, provided in addition to any one of the first to tenth aspects, a processing circuitry of the communication device controls to perform measurements on the SSBs using one or more SMTCs. In an optional implementation, the transceiver transmits a measurement report to a base station, including results of the measurements performed on the SSBs, Alternatively, in an optional implementation, the processing circuit performs cell selection or cell reselection based on results of the measurements performed on the SSBs.

According to a twelfth aspect, provided in addition to any one of the first to eleventh aspects, the device capability information indicates a capability of the communication device, per one of:
- a cell,
- a cell group,
- an operator frequency band,
- an operator frequency band combination,
- a frequency range.

According to a thirteenth aspect, provided in addition to any one of the first to twelfth aspects, a processing circuitry determines the device capability information from internal information of the communication device.

According to a fourteenth aspect, a network device is provided comprising the following. A transceiver of the network device receives device capability information from a communication device. The device capability information indicates a capability of the communication device to support at least any two of:
- one type or plural types of synchronization signal blocks, SSB,
- SSBs in a same frequency location or different frequency locations,
- SSBs on one or more frequency synchronization raster, and
- one or more SSB measurement timing configurations, SMTC, respectively defining a measurement time window for the UE to measure one or more SSBs.

According to a fifteenth aspect, provided in addition to the fourteenth aspect, the network device further comprises a processing circuitry, which determines to configure the communication device, based on the received device capability information, with:
- one or more types of SSBs, including respective frequency locations of the SSBs and/or respective frequency synchronization raster, and
- one or more SMTCs.

The transceiver transmits configuration information to the communication device, indicating the determined one or more types of SSBs and one or more SMTCs.

According to a sixteenth aspect, a method is provided comprising the following steps performed by a communication device:
transmitting device capability information to another device,
wherein the device capability information indicates a capability of the communication device to support at least any two of:
   - one type or plural types of synchronization signal blocks, SSB,
   - SSBs in a same frequency location or different frequency locations,
   - SSBs on one or more frequency synchronization raster, and
   - one or more SSB measurement timing configurations, SMTC, respectively defining a measurement time window for the UE to measure one or more SSBs.

According to a seventeenth aspect, a method is provided comprising the following steps performed by a network device:
receiving device capability information from a communication device,
wherein the device capability information indicates a capability of the communication device to support at least any two of:
   - one type or plural types of synchronization signal blocks, SSB,
   - SSBs in a same frequency location or different frequency locations,
   - SSBs on one or more frequency synchronization raster, and
   - one or more SSB measurement timing configurations, SMTC, respectively defining a measurement time window for the UE to measure one or more SSBs.

According to an eighteenth aspect, an integrated circuit is provided, which, in operation, controls a process of a communication device, the process comprising the following steps performed by the communication device:
transmitting device capability information to another device,
wherein the device capability information indicates a capability of the communication device to support at least any two of:
   - one type or plural types of synchronization signal blocks, SSB,
   - SSBs in a same frequency location or different frequency locations,
   - SSBs on one or more frequency synchronization raster, and
   - one or more SSB measurement timing configurations, SMTC, respectively defining a measurement time window for the UE to measure one or more SSBs.

According to a nineteenth aspect, an integrated circuit is provided, which, in operation, controls a process of a network device, the process comprising the following steps performed by the network device:
receiving device capability information from a communication device,
wherein the device capability information indicates a capability of the communication device to support at least any two of:
   - one type or plural types of synchronization signal blocks, SSB,
   - SSBs in a same frequency location or different frequency locations,
   - SSBs on one or more frequency synchronization raster, and
   - one or more SSB measurement timing configurations, SMTC, respectively defining a measurement time window for the UE to measure one or more SSBs.

## Claims

1. A communication device, comprising:
a transceiver, which in operation, transmits device capability information to another device,
wherein the device capability information indicates a capability of the communication device to support at least any two of:
- one type or plural types of synchronization signal blocks, SSB,
- SSBs in a same frequency location or different frequency locations,
- SSBs on one or more frequency synchronization raster, and
- one or more SSB measurement timing configurations, SMTC, respectively defining a measurement time window for the UE to measure one or more SSBs.

2. The communication device according to claim 1, wherein the types of SSB signals include always-on SSB, on-demand SSB, and adaptive SSB,
optionally wherein the always-on SSB, once configured, is an SSB always transmitted by a base station for a cell,
optionally wherein the on-demand SSB is an SSB that can be transmitted by a base station for a cell when triggered,
optionally wherein the adaptive SSB is an SSB that can be transmitted by a base station for a cell and has one or more SSB parameters that are adaptive, such as a transmission periodicity of the adaptive SSB.

3. The communication device according to any one of claims 1 to 2, wherein the device capability information indicates that the communication device supports
- one SMTC, and
- two or more types of SSBs, and
optionally wherein the device capability information further indicates that the communication device supports SSBs with respectively a same frequency location, and
optionally wherein the device capability information further indicates that the communication device supports SSBs on one frequency synchronization raster,
optionally wherein the transceiver, in operation, receives configuration information from a base station according to which the SMTC and SSBs are configured such that:
- in one measurement time window of the SMTC, one of the two or more SSB types are measurable separately, or
- in one measurement time window of the SMTC, more than one of the two or more SSB types are measurable.

4. The communication device according to any one of claims 1 to 3, wherein the device capability information indicates that the communication device supports
- two or more SMTCs, and
- two or more types of SSBs, and
optionally wherein the device capability information further indicates that the communication device supports SSBs with respectively a same frequency location, and
optionally wherein the device capability information further indicates that the communication device supports SSBs on one frequency synchronization raster,
optionally wherein the transceiver, in operation, receives configuration information from a base station according to which the SMTCs and SSBs are configured such that:
- one SMTC is associated with at least one SSB type,
optionally wherein the communication device is configured to measure one SSB type using only one SMTC at a time or to measure more than one SSB type using more than one SMTC simultaneously at a time.

5. The communication device according to claim 4, wherein the device capability information indicates that the communication device supports
- two or more types of SSBs with respectively different frequency locations,
optionally wherein the device capability information further indicates that the communication device supports SSBs on one or more frequency synchronization raster,
optionally wherein the device capability information further indicates a maximum frequency gap between the different supported frequency locations of the different SSB types,
optionally wherein the two or more SMTCs associated with the two or more SSB types with different frequency locations are configured such that the measurement time windows configured for the two or more SMTCs do not overlap in time.

6. The communication device according to any one of claims 1 to 5, wherein the device capability information indicates that the communication device supports
- one adaptive SMTC, and
- two or more types of SSBs, and
optionally wherein the device capability information further indicates that the communication device supports SSBs with respectively a same frequency location, and
optionally wherein the device capability information further indicates that the communication device supports SSBs on one frequency synchronization raster,
optionally wherein the adaptive SMTC is adaptive as to one or more of the following parameters: a periodicity of the measurement time window, a duration of the measurement time window, and an offset of the measurement time window, and
optionally wherein the transceiver, in operation, receives configuration information from a base station regarding the one adaptive SMTC and the two or more SSB types, including a plurality of parameters of the adaptive SMTC,
optionally wherein processing circuitry of the communication device, in operation, determines which parameters of the adaptive SMTC to use, based on the configured two or more types of SSBs,
optionally wherein the processing circuitry determines to use parameters of the adaptive SMTC such that:
- in one measurement window of the one adaptive SMTC, one of the two or more SSB types are measurable, or
- in one measurement window of the one adaptive SMTC, more than one of the two or more SSB types are measurable.

7. The communication device according to claim 6, wherein the two or more types of SSBs include at least one always-on SSB and an on-demand SSB, and wherein the processing circuitry determines to use parameters of the adaptive SMTC depending on whether one or both of the always-on SSB and on-demand SSB are to be measured,
wherein the two or more types of SSBs include at least one always-on SSB and an adaptive SSB, and wherein the processing circuitry determines to use parameters of the adaptive SMTC that correspond to parameters of the adaptive SSB, such as one or more of a corresponding periodicity, a corresponding duration or a corresponding offset.

8. The communication device according to any one of claims 1 to 7, wherein the device capability information indicates that the communication device supports
- one adaptive SMTC, and
- one adaptive SSB, and
optionally wherein a processing circuitry determines to use parameters of the adaptive SMTC that correspond to parameters of the adaptive SSB, such as one or more of a corresponding periodicity, a corresponding duration or a corresponding offset.

9. The communication device according to claim 6 or 7 or 8, wherein the device capability information indicates that the communication device supports,
- two or more types of SSBs with respectively different frequency locations, and
optionally wherein the device capability information further indicates that the communication device supports SSBs on one or more synchronization frequency raster,
optionally wherein the device capability information further indicates a maximum frequency gap between the different supported frequency locations of the different SSB types.

10. The communication device according to any one of claims 1 to 9, wherein the transceiver, in operation, receives configuration information from the a station, the configuration information configuring any one or any combination of:
- one or more types of SSBs, including respective frequency locations of the SSBs and/or respective frequency synchronization raster, and
- one or more SMTCs.

11. The communication device according to any one of claims 1 to 10, wherein the device capability information indicates a capability of the communication device, per one of:
- a cell,
- a cell group,
- an operator frequency band,
- an operator frequency band combination,
- a frequency range.

12. A network device comprising:
a transceiver, which in operation, receives device capability information from a communication device,
wherein the device capability information indicates a capability of the communication device to support at least any two of:
- one type or plural types of synchronization signal blocks, SSB,
- SSBs in a same frequency location or different frequency locations,
- SSBs on one or more frequency synchronization raster, and
- one or more SSB measurement timing configurations, SMTC, respectively defining a measurement time window for the UE to measure one or more SSBs.

13. The network device according to claim 12, further comprising a processing circuitry, which in operation, determines to configure the communication device, based on the received device capability information, with:
- one or more types of SSBs, including respective frequency locations of the SSBs and/or respective frequency synchronization raster, and
- one or more SMTCs,
wherein the transceiver, in operation, transmits configuration information to the communication device, indicating the determined one or more types of SSBs and one or more SMTCs.

14. A method comprising the following steps performed by a communication device:
transmitting device capability information to another device,
wherein the device capability information indicates a capability of the communication device to support at least any two of:
- one type or plural types of synchronization signal blocks, SSB,
- SSBs in a same frequency location or different frequency locations,
- SSBs on one or more frequency synchronization raster, and
- one or more SSB measurement timing configurations, SMTC, respectively defining a measurement time window for the UE to measure one or more SSBs.

15. A method comprising the following steps performed by a network device:
receiving device capability information from a communication device,
wherein the device capability information indicates a capability of the communication device to support at least any two of:
- one type or plural types of synchronization signal blocks, SSB,
- SSBs in a same frequency location or different frequency locations,
- SSBs on one or more frequency synchronization raster, and
- one or more SSB measurement timing configurations, SMTC, respectively defining a measurement time window for the UE to measure one or more SSBs.
